# EUROPEAN PATENT APPLICATION

(11) **EP 4 800 186 A1**
(43) Date of publication of application: **02.09.2026**
(21) Application number: 26157608.6
(22) Date of filing: 10.02.2026
(51) Int. Cl.: E02D 29/14, G08B 13/08

(54) **SMART MANHOLE MONITORING SYSTEM WITH SIMPLIFIED INSTALLATION**

(30) Priority: 28.02.2025 HK 32025104127
(71) Applicant: Lam, Kin Yan, Kowloon (HK)
(72) Inventor: Lam, Kin Yan, Kowloon (HK)
(74) Representative: De Arpe Tejero, Manuel

(57) **Abstract**

The present invention provides a manhole monitoring system (10) including: a smart monitoring device (110) installable on or to a manhole cover (20); and a shape adapter (120) installable on or to a base frame (30) mated with the manhole cover (20), wherein the smart monitoring device (110) includes a pressure sensor configurable to cooperate with the shape adapter (120) to detect existence of the manhole cover (20) at the base frame (30), wherein the manhole monitoring system (10) can be installed on site or off site by workers without entering into the confined space in the manhole, and wherein the present invention not only prevents working accidents caused by hazards in the confined space, but it also significantly reduces the time and manpower for installation.

## Description

### Field of the Invention:

The present invention generally relates to manhole monitoring. More specifically, the present invention relates to a manhole monitoring system which can be installed on site without entering into the underground tunnel space.

### Background of the Invention:

In underground tunnel construction for public utilities like sewage systems, water pipes, electricity supply, and communication networks, a manhole is provided on ground surface through which a worker can enter to install a piping system or perform repair works. The operators of manholes face challenges in monitoring and preventing unauthorized access to these widely distributed manholes and thefts of the manhole covers. Furthermore, it is desirable to collect data, such as water levels and gas concentration, before opening a manhole cover for obvious safety reasons.

In the known current state of the art, sensors for data collection and manhole cover removal detection devices are mounted within the manhole itself, which require workers to enter the manhole to install. Working in confined space in underground tunnel construction present significant risks for the workers. These hazards may include oxygen deficiency, toxic gas accumulation, and rising water levels. As such, most governments mandate professional training and licensing for workers to perform such manhole and underground tunnel work, making the resource scarce and expensive. Further, the installation and maintenance of such sensors and detection devices are complex, costly and time consuming, often requiring road closures. Thus, the progresses of upgrading manholes into 'smart' manholes around the world have largely stalled due to resource constraints, high risk of human life during installation and the undesirable disruptions to road traffic that would cause.

### Summary of the Invention:

To address the aforementioned shortcomings, the present invention provides a manhole monitoring system comprising sensor devices that can be installed on site by workers without the need of a person entering into the manhole itself or a complex, costly and time-consuming installation procedure.

According to one aspect of the present invention, the manhole monitoring system includes: a smart monitoring device installable on to a manhole cover; and a shape adapter installable on to a base frame mated to the manhole cover. The smart monitoring device includes a pressure sensor configurable to cooperate with the shape adapter to detect existence of the manhole cover at the base frame.

The present invention not only prevents working accidents caused by hazards in the confined space, but also significantly reduces the time, cost and manpower for installation. Moreover, the monitoring system can continuously monitor data such as temperature, humidity, hazardous gas concentration and water level with low power consumption. The manhole monitoring system may also have wireless communication capability for sending alerts to a control center when unauthorized access, theft and/or abnormal environmental conditions are detected.

### Brief Description of the Drawings:

Aspects of the present disclosure may be readily understood from the following detailed description with reference to the accompanying figures. The illustrations may not necessarily be drawn to scale. That is, the dimensions of the various features may be arbitrarily increased or reduced for clarity of discussion. There may be distinctions between the artistic renditions in the present disclosure and the actual apparatus due to manufacturing processes and tolerances. Common reference numerals may be used throughout the drawings and the detailed description to indicate the same or similar components.
FIG. 1A shows a bottom view of a manhole monitoring system installed on a manhole cover in accordance with one embodiment of the present invention; FIG. 1B shows an isometric view of the manhole monitoring system; and FIG. 1C shows a close-up view of the manhole monitoring system;
FIGS. 2A to 2H show various shapes of the smart monitoring device specifically designed according to the different manhole cover types;
FIGS. 3A to 3C show an isometric view, a cross-sectional view and a close-up view of some parts of a movement sensor installed in a smart monitoring device in accordance with one embodiment of the present invention;
FIGS. 4A and 4B show isometric and cross-sectional views about how the smart monitoring device of FIGS. 3A and 3B is mounted on a manhole cover;
FIG. 5 shows a smart monitoring device installed with a movement sensor in accordance with another embodiment of the present invention;
FIG. 6A shows a transmission system in the movement sensor inside the smart monitoring device of FIG. 5; and FIG. 6B shows an exploded view of the transmission system;
FIGS. 7A and 7B show a movement sensor installed in a smart monitoring device in accordance with another embodiment of the present invention;
FIG. 8 shows an exemplary design of an actuator in accordance with another embodiment of the present invention;
FIG. 9 shows a cross-sectional view of a movement sensor installed in a smart monitoring device in accordance with another embodiment of the present invention;
FIG. 10 shows a pressure sensor installed in a smart monitoring device in accordance with another embodiment of the present invention;
FIGS. 11A and 11B show an isometric view and a cross-sectional view of a transmission system of the pressure sensor of FIG. 10, respectively; and FIG. 11C shows a close-up view of a positioning gear mounted on a rotational rod linking the positioning gear to a position decoder;

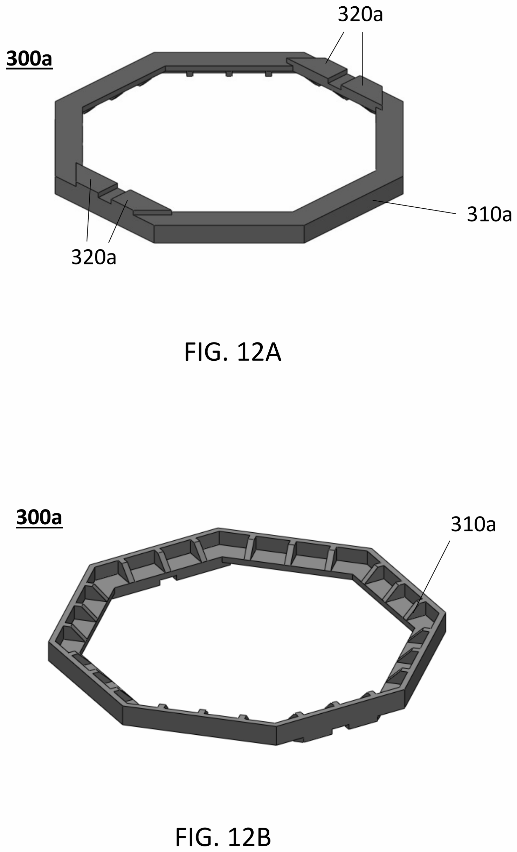

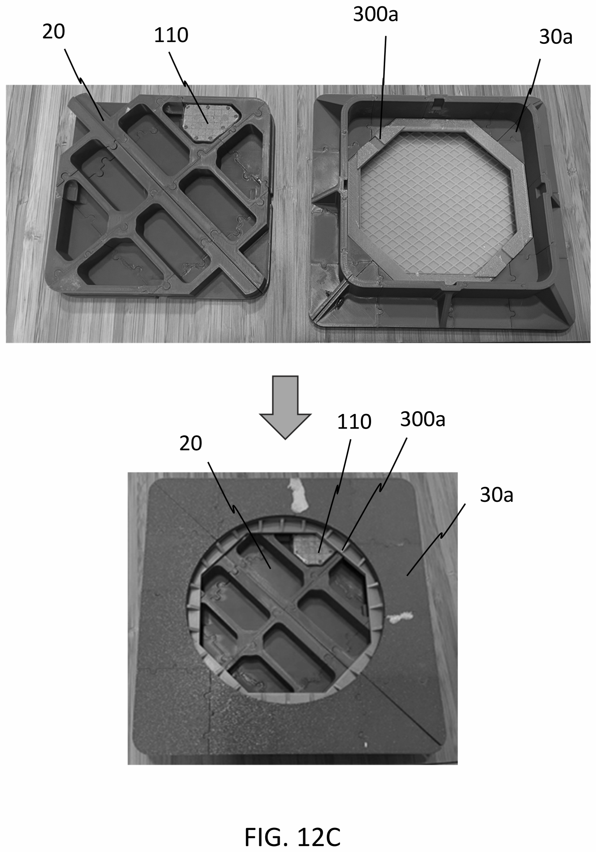

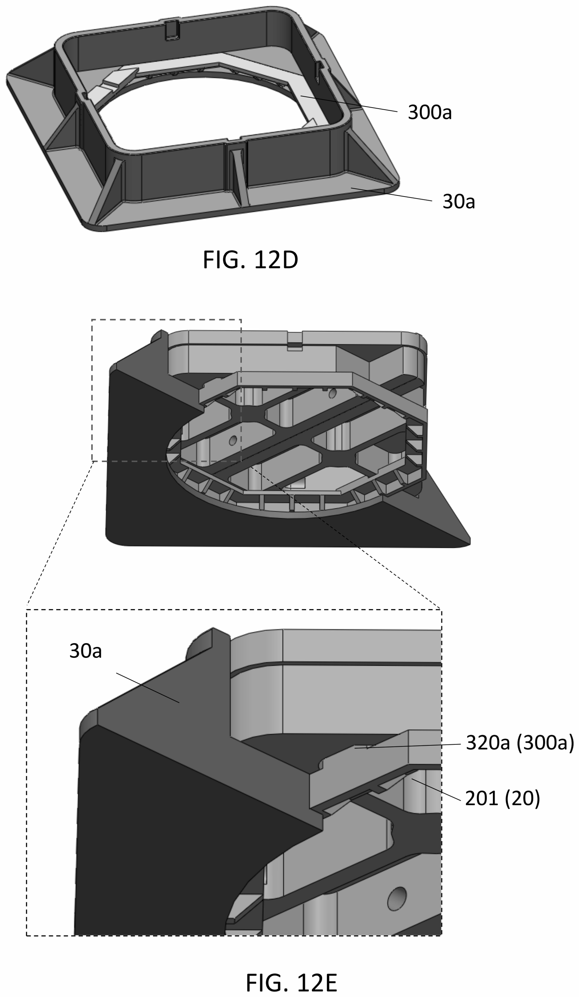

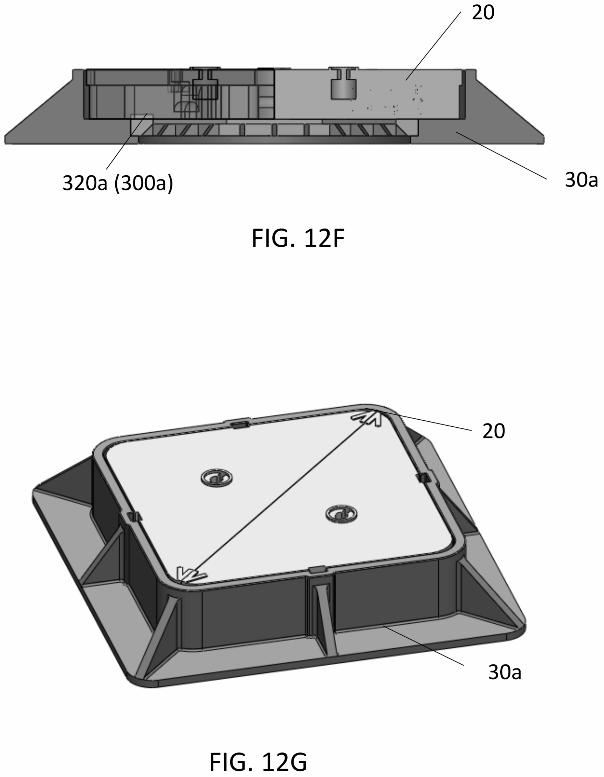

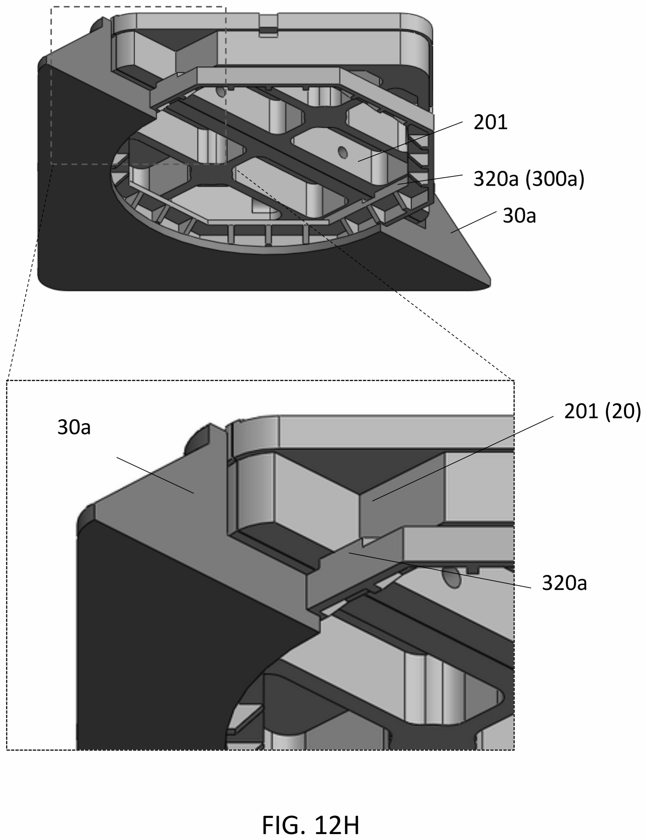

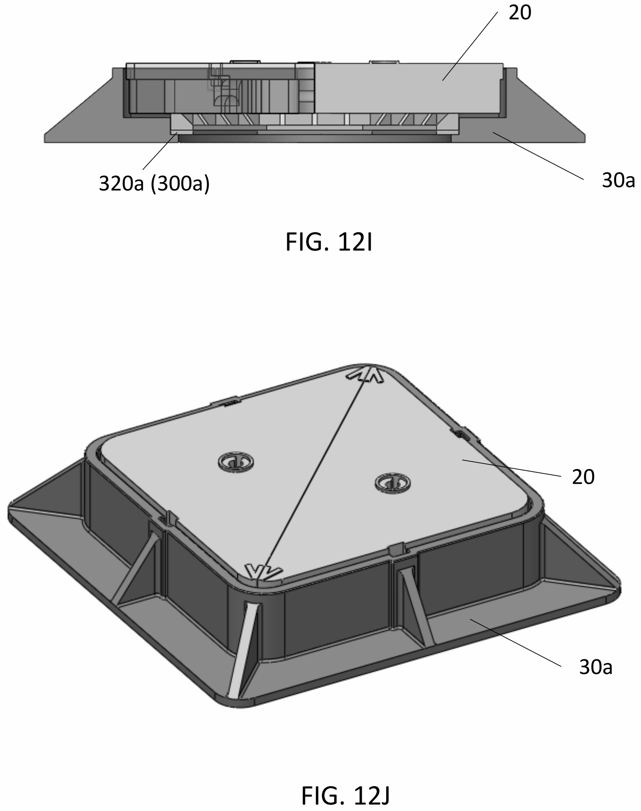

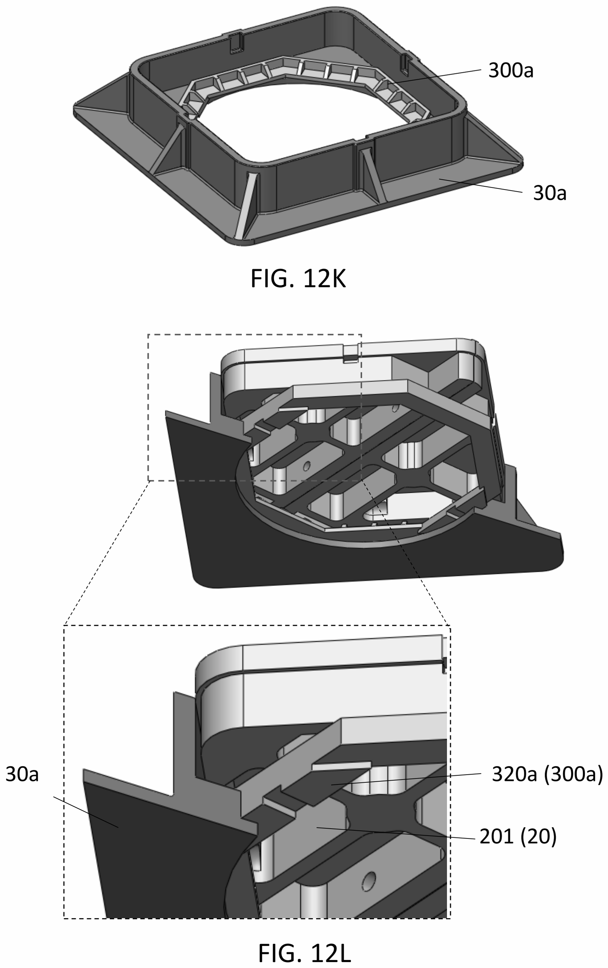

FIGS. 12A and 12B show a top perspective view and a bottom perspective view respectively of a shape adapter in accordance with one embodiment of the present invention; and FIG. 12C shows a photograph illustrating a prototype of the shape adapter of FIGS. 12A and 12B installed on to a base frame and how it cooperates with a smart monitoring device prototype installed on to a manhole cover; FIGS. 12D shows the shape adapter being properly installed on to a base frame; FIG. 12E illustrates how the shape adapter is designed to correspond with a manhole cover; FIGS. 12F and 12G show side view and isometric view of the manhole cover being inserted completely into the base frame; FIG. 12H shows the shape adapter being arranged in a wrong orientation on the base frame; FIGS. 12I and 12J show side view and isometric view of that the manhole cover is not inserted completely into the base frame due to the wrong orientation arrangement of the shape adapter; FIG. 12K shows the shape adapter being flipped upside down when being installed on the base frame; and FIG. 12L shows that the overall height of the shape adapter is raised with respect to the base frame due to the upside down arrangement of the shape adapter;

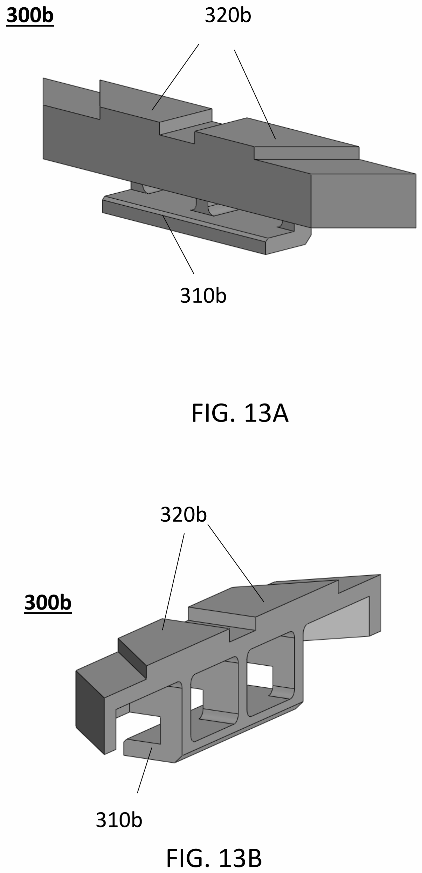

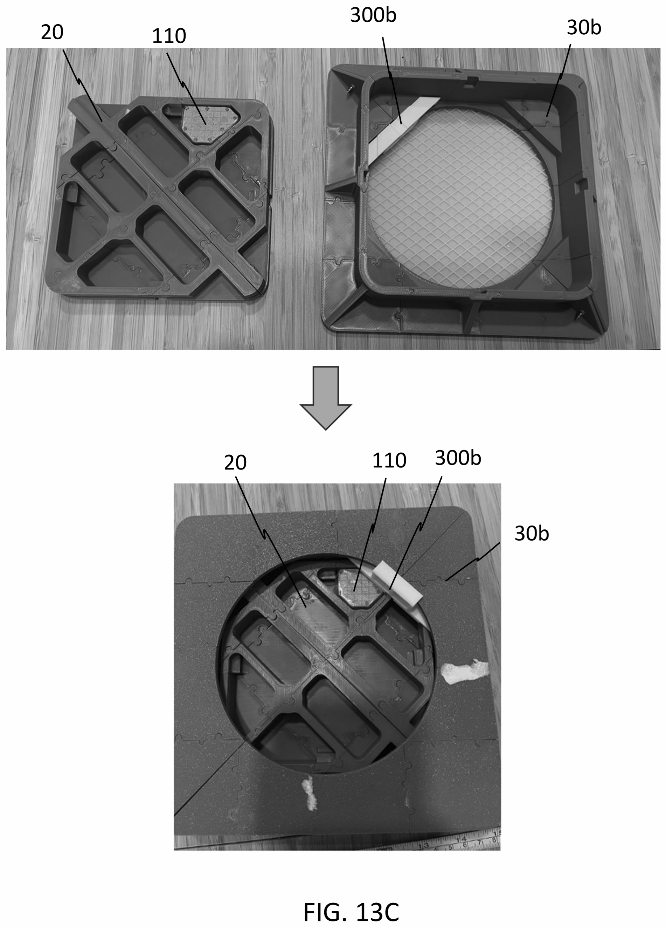

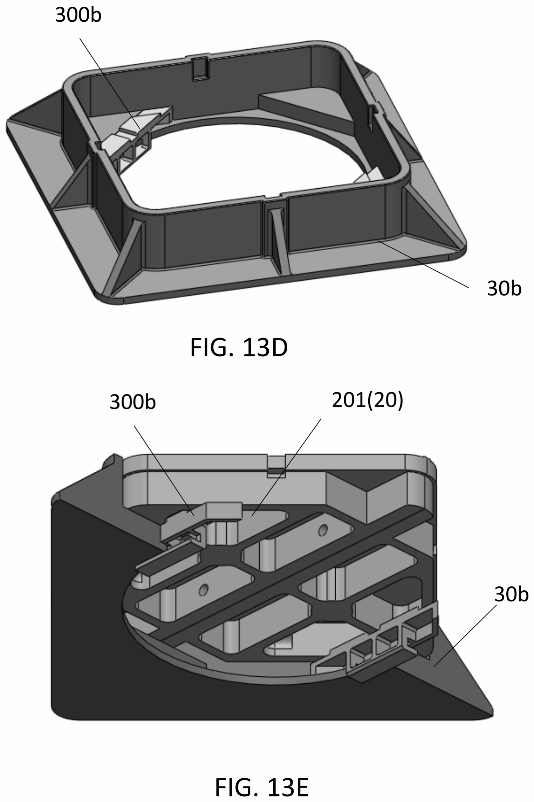

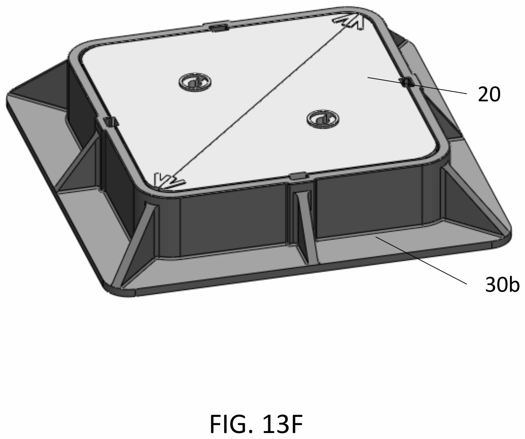

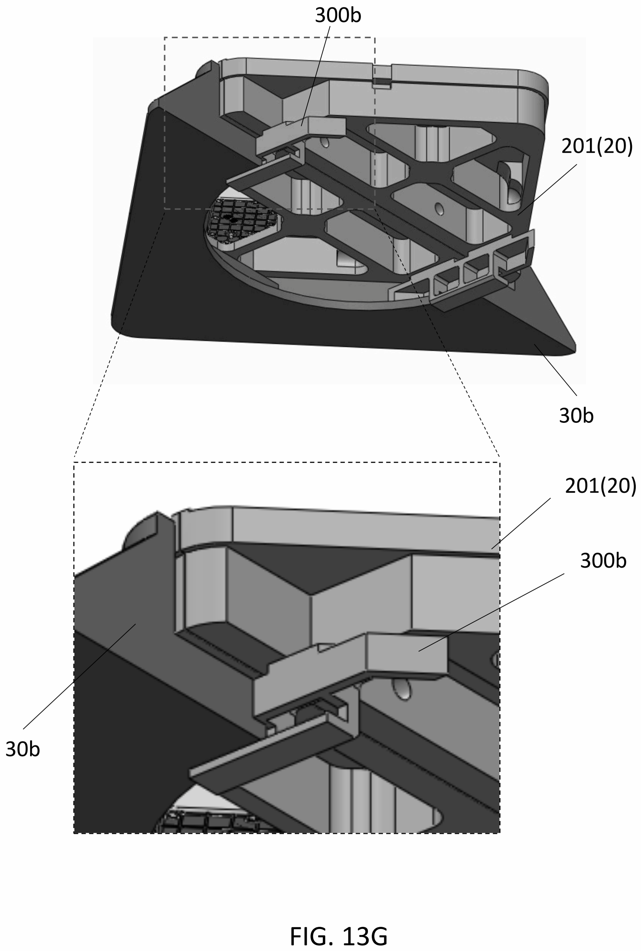

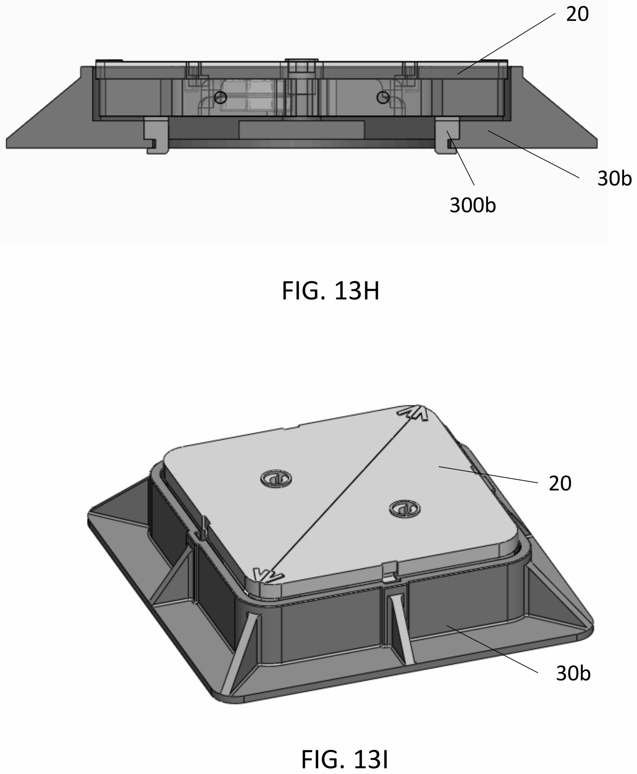

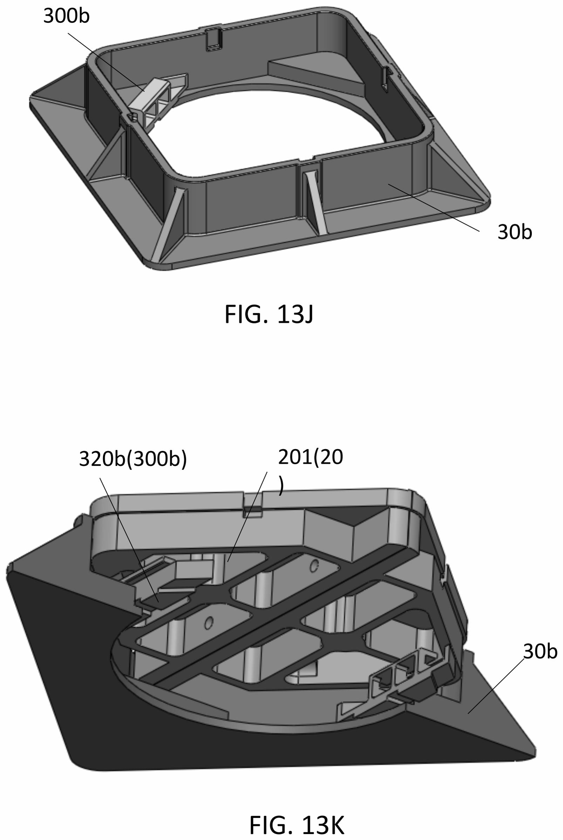

FIGS. 13A and 13B show a top perspective view and a bottom perspective view respectively of a shape adapter in accordance with another embodiment of the present invention; and FIG. 13C shows a photograph illustrating a prototype of the shape adapter of FIGS. 13A and 13B installed on to a base frame and how it cooperates with a smart monitoring device prototype installed on to a manhole cover; FIGS. 13D shows the shape adapter being properly installed on a base frame; FIG. 13E shows how the shape adapter is designed to correspond with a manhole cover; FIG. 13F shows the manhole cover being inserted completely into the base frame; FIG. 13G shows the shape adapter being arranged in a wrong orientation on the base frame and not able to correspond properly with the manhole cover; FIGS. 13H and 13I show side view and isometric view of that the manhole cover is not inserted completely into the base frame due to the wrong orientation arrangement of the shape adapter; FIG. 13J shows the shape adapter being flipped upside down when being installed on the base frame; and FIG. 13K shows that the overall height of the shape adapter is raised with respect to the base frame due to the upside down arrangement of the shape adapter;
FIGS. 14A and 14B show a top isometric view and a bottom isometric view of a shape adapter in accordance with another embodiment of the present invention; FIG. 14C shows a diagram illustrate how the shape adapter of FIG. 14A is installed on to a base frame; FIGS. 14D and 14E shows a top isometric view and a bottom isometric view of a shape adapter in accordance with another embodiment of the present invention;
FIG. 15A shows a shape adapter in accordance with another embodiment of the present invention; and FIG. 15B shows a ring-type design of the shape adapter of FIG. 15A;
FIG. 16 shows a shape adapter in accordance with another embodiment of the present invention;
FIGS. 17A and 17B show a top isometric view and a bottom isometric view of a shape adapter in accordance with another embodiment of the present invention;
FIGS. 18A and 18B show a top isometric view and a bottom isometric view of a shape adapter in accordance with another embodiment of the present invention; FIG. 18C shows how a ring-type design of the shape adapter of FIG. 18A is formed; FIG. 18D shows a close-up view of area A in FIG. 18C; and FIGS. 18E and 18F show a top isometric view and a bottom isometric view of the ring-type design of the shape adapter respectively;
FIGS. 19A to 19C show various views of a shape adapter being wrongly used for a base frame; FIGS. 19D and 19E show various views of how a manhole cover is lifted up by a shape adapter being wrongly used for a base frame when the manhole cover is placed on the base frame;
FIGS. 20A to 20C show various views of a shape adapter being wrongly used for a base frame; FIGS. 20D and 20E show how a manhole cover is lifted up by a shape adapter being wrongly used for a base frame when the manhole cover is placed on the base frame.

### Detailed Description:

In the following description, preferred examples of the manhole monitoring system will be set forth as embodiments which are to be regarded as illustrative rather than restrictive. Specific details may be omitted so as not to obscure the present disclosure; however, the disclosure is written to enable one skilled in the art to practice the teachings herein without undue experimentation.

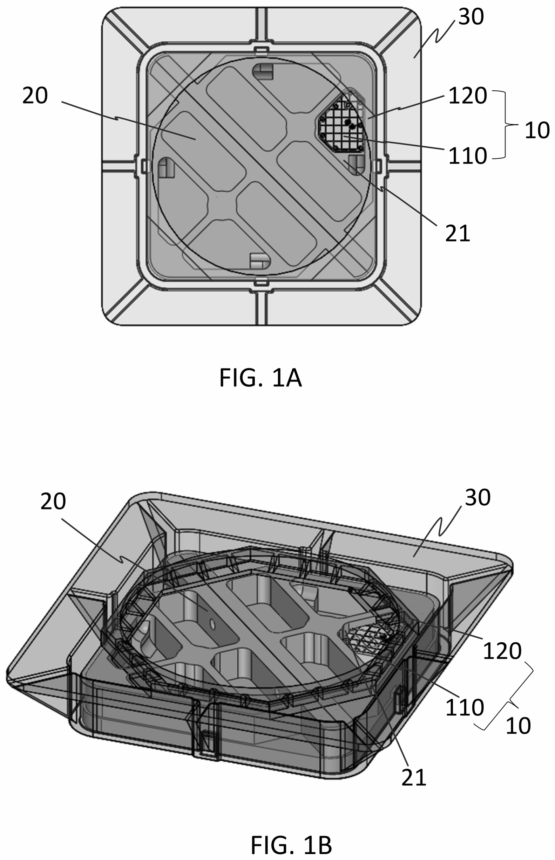

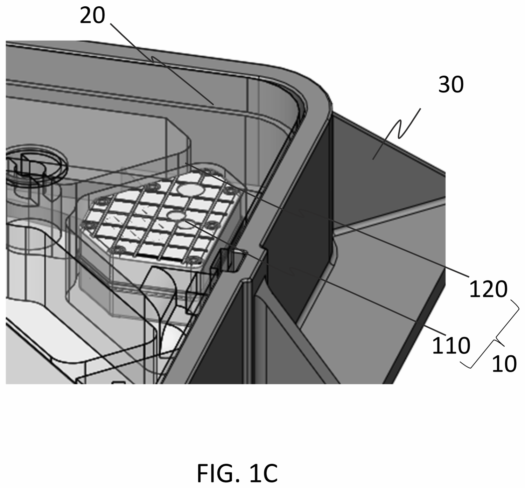

FIG. 1A shows a bottom view of a manhole monitoring system 10 installed on a manhole cover 20 and placed on a base frame 30 in accordance with one embodiment of the present invention; FIG. 1B shows an isometric view of the manhole monitoring system 10; and FIG. 1C shows a close-up view of the manhole monitoring system 10. The manhole monitoring system 10 includes at least one smart monitoring device 110 installable on to the manhole cover 20; and a shape adapter 120 installable on to the base frame 30 mated with the manhole cover 20.

The smart monitoring device 110 has an outer enclosure having a size and a shape that can be fitted into a cavity 21 of a comb structure at a bottom of the manhole cover 20. The smart monitoring device also has a height less than an inner height of the cavity 21 such that the monitoring device 110 would not protrude out of the bottom surface of the manhole cover 20 after being installed on to the manhole cover 20.

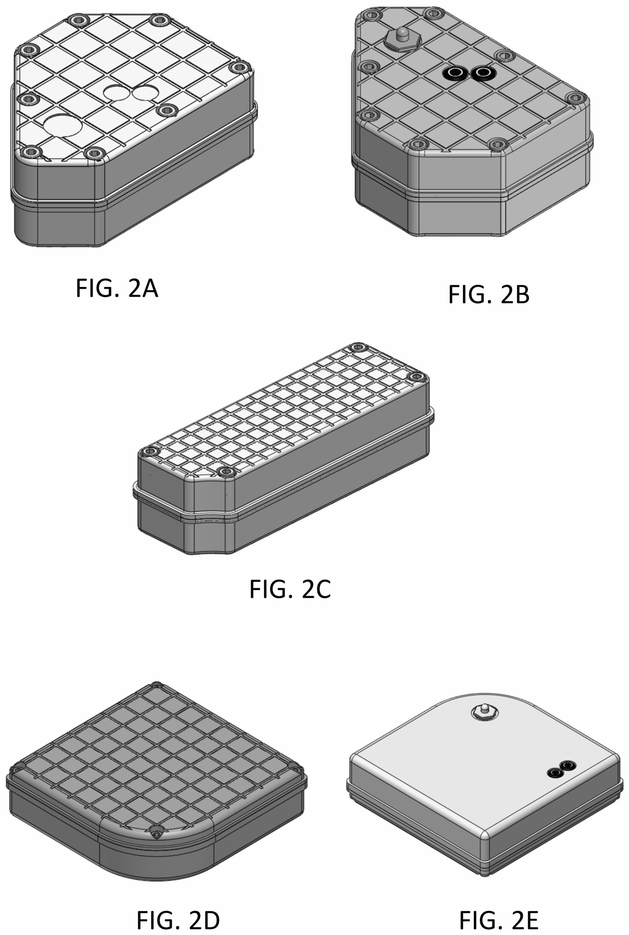

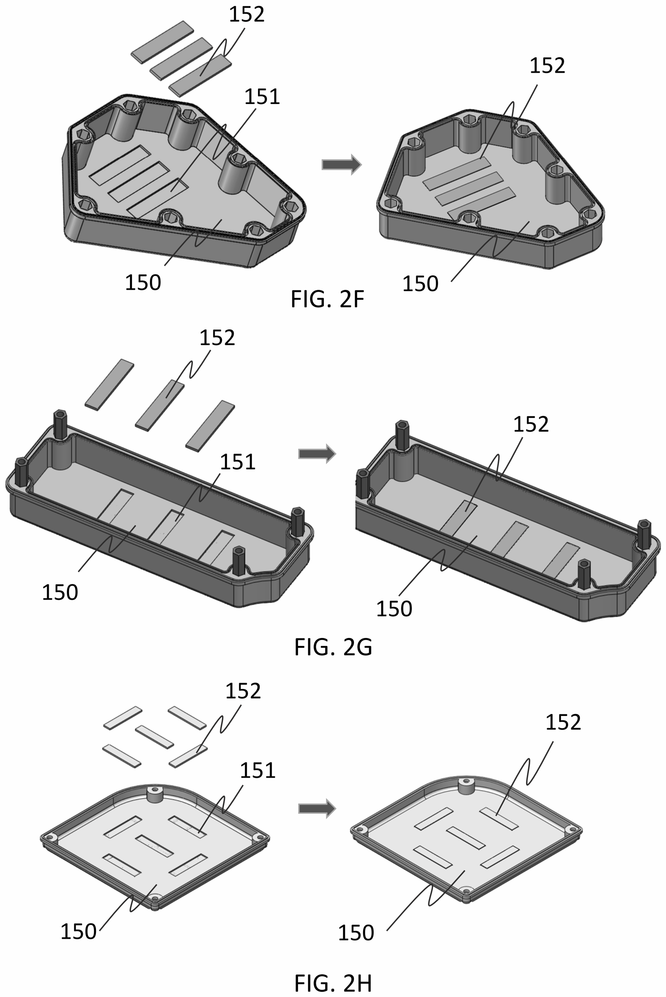

Preferably, the shape of the outer enclosure of the smart monitoring device 110 is symmetrical, which simplifies its installation (fitting into the cavity 21) by eliminating the need for strict orientation alignment. Since manhole covers normally have symmetric structure, the cavities on the left and right side are mirrored. During manufacturing, the installation of the smart monitoring device might simply require the drilling of one or more holes in the chosen side of the manhole cover. In the various embodiments, the size and shape of the outer enclosure of the smart monitoring device 110 are specifically designed according to the different manhole cover types as shown in FIGS. 2A to 2E, including but not limited to, a corner-shaped type A (FIGS. 2A and 2B showing its top and bottom views respectively), a rectangle-shaped type B (FIG. 2C), and a corner-shaped type C (FIGS. 2D and 2E showing its top and bottom views respectively).

Preferably, the smart monitoring device 110 may be secured to the manhole cover by applying resins or glues to interfaces between the device and the manhole cover. In the cases that the manhole cover is made of iron, the device 110 may include one or more magnetic elements for attach the device 110 to the manhole cover. As shown in FIGS. 2F to 2H, the device 110 may have one or more grooves 151 on an interior/exterior wall of the outer enclosure 150 for accommodating one or more magnets 152 such that the device 110 can be temporarily attached to the manhole cover before the device 110 is secured with glue or resin.

The outer enclosure of the smart monitoring device 110 is sealed and configured for protecting the internal components of the smart monitoring device 110 from moisture, dust, and electromagnetic interference with an electrical enclosure rating of IP67. And preferably, the outer enclosure of the smart monitoring device 110 is made of electrostatic-free, high corrosion resistive, and fire-retardant material, such as, but not limited to, Metal, Polyamide (PA), Nylon, acrylic, Ploycarbonate (PC), Polyetheretherketone (PEEK), Polytetrafluoroethylene (PTFE), Acrylonitrile butadiene styrene (ABS), Polyethylene terephthalate glycol (PETG), Polyvinyl Chloride (PVC), Glass, Fiber Glass, Carbon Fiber, EProxy, Resin, Concrete, Sand and the mix of the above materials.

The smart monitoring device 110 may include various sensors for sensing and generating signals indicative of status of the manhole cover and environmental conditions of the confined manhole space under the manhole cover; and a local processor for processing the generated signals to determine the status of the manhole cover and the environmental conditions in the confined manhole space; and a communication unit for transmitting the determined status of the manhole cover and the environmental conditions in the confined manhole space to one or more remote or cloud-based processors for data recording, reporting, and user-alerting.

In one embodiment, the smart monitoring device 110 may include a movement sensor or a pressure sensor configurable to cooperate with the base frame 30 or the shape adapter 120 to detect the presence (weight) of the manhole cover 20 on the base frame 30.

The movement sensor may include a transmission system and transducer mechanically coupled with or linked to the transmission system. The transmission system is configured to be moved by a force or pressure (e.g., pressing force) exerted by the base frame 30 or shape adapter 120, and transfer the force to the transducer to trigger the transducer to generate an electrical signal.

The local processor may be electrically connected to the transducer and further configured to process the electrical signal generated by the transducer to determine whether the manhole cover is placed on the base frame (manhole cover presence status). The local processor may periodically send the manhole cover presence status and/or a change of the manhole cover presence status to the remote or cloud-based processors via the communication unit.

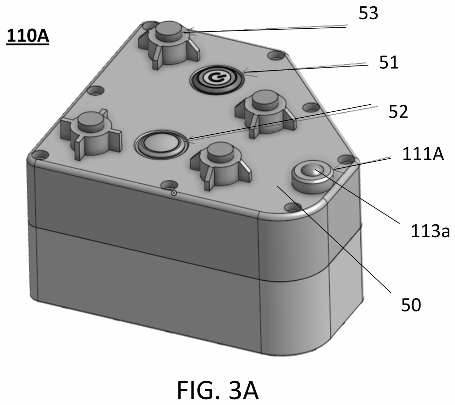

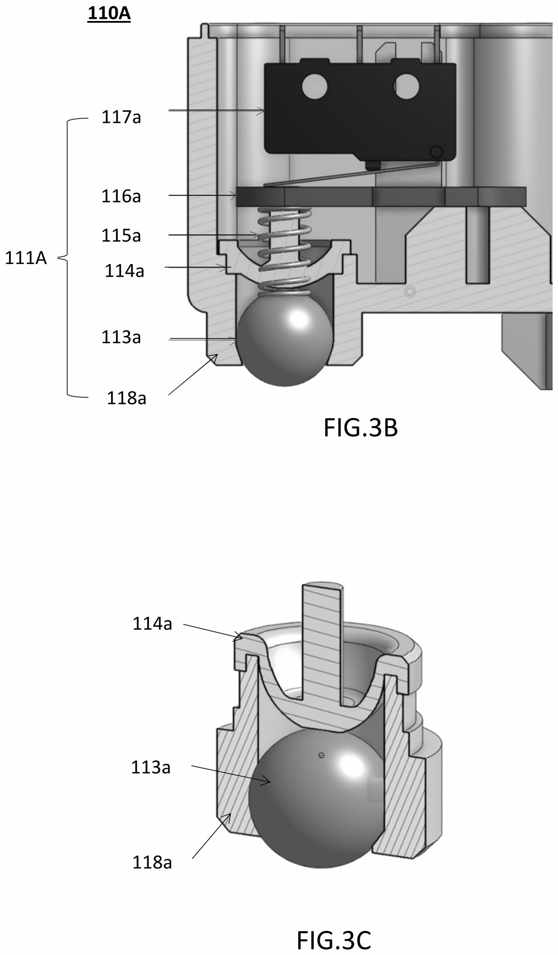

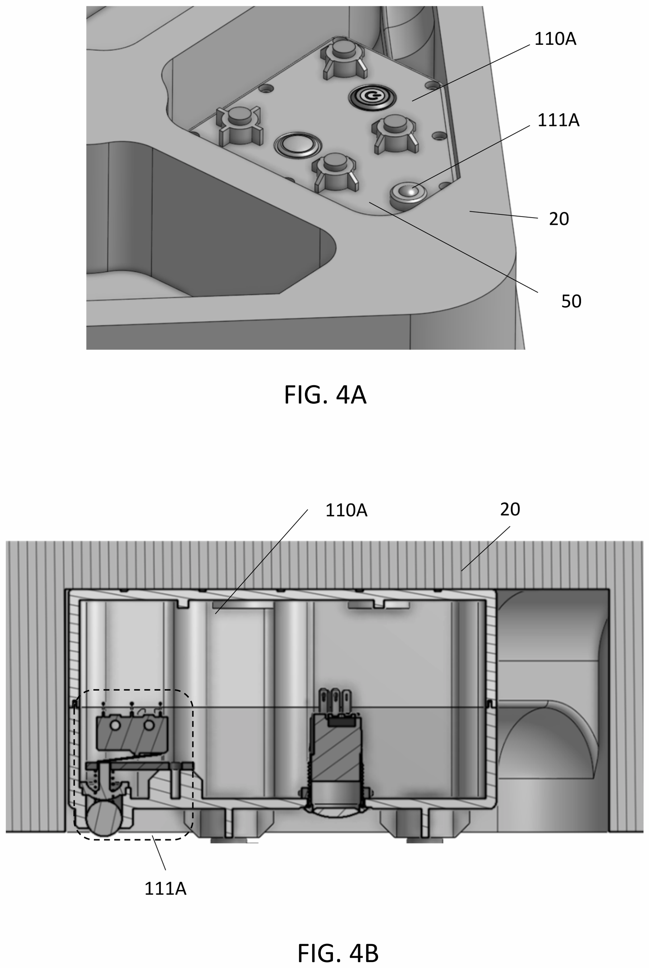

FIGS. 3A to 3C show an isometric view, a cross-sectional view and a close-up view of some parts of a movement sensor 111A installed in a smart monitoring device 110A in accordance with one embodiment of the present invention. FIGS. 4A and 4B show isometric and cross-sectional views about how the smart monitoring device 110A is mounted on a manhole cover 20.

As shown, the movement sensor 111A includes a transmission system and a transducer 117a which may be a tactile switch. The transmission system comprises a ball bearing 113a; a button seal 114a fixed to the ball bearing 113a; a resilient element (e.g. a coil spring) 115a mechanically coupled with the ball bearing 113a; and a trigger element 116a mechanically coupled with or linked to the button seal 114a.

The ball bearing 113a is arranged at an original position to expose out of an opening on a surface 50 of the smart monitoring device 110A and acts as a movable or rollable part to be moved by a force exerted by the based frame or the shape adapter 120 to a triggering position. The surface 50 is a surface of the smart monitoring device 110A proximal to a base frame when the smart monitoring device 110A is mounted to a manhole cover and the manhole cover is placed on the base frame.

The button seal 114a and trigger element 116a work together to act as a transmission part for transferring motion of the ball bearing 113a to the transducer 117a.

The movement sensor 111A may further include a ball bearing holder 118a for holding the ball bearing 113a and guiding movement of the ball bearing 113a. The button seal 114a is made of flexible plastic and arranged at an opening between the ball bearing holder and an inner cavity of the smart monitoring device such that the button seal 114a can act as a sealer for sealing the opening on the surface 50 to prevent water and/or dirty particles from entering the smart monitoring device 110A. Moreover, when the manhole cover is place on the ground and dragged around, the button seal 114a is deformable such that the ball bearing 113a can retract back into the ball bearing holder 118a to avoid damages.

The smart monitoring device 110A may further include a ON/OFF button 51 for switching on/off the device and a reset button 52 for resetting the device. The smart monitoring device may further include one or more spacers 53 (e.g. rubber feet) arranged for protecting the movement sensor 111A.

When the manhole cover 20 is placed on the base frame, the ball bearing 113a is pushed up from the original position to the triggering position and transfers a force to the trigger plate 116a through the button seal 114a. The trigger plate 116a is in turn pushed up and the transducer 117a is triggered to generate an electrical signal indicative of that there is a manhole cover placed on the base frame.

When the manhole cover 20 is removed from the base frame, the ball bearing 113a is biased by the coil spring 115a and moved from the triggering position to the original position. The transducer 117a is switched to generate an electrical signal indicative of that there is no manhole cover 20 placed on the base frame.

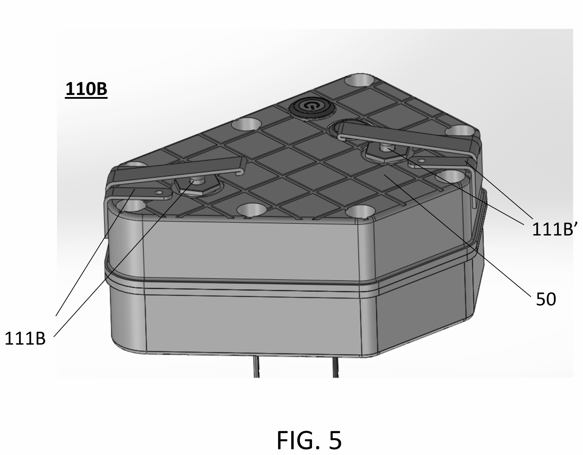

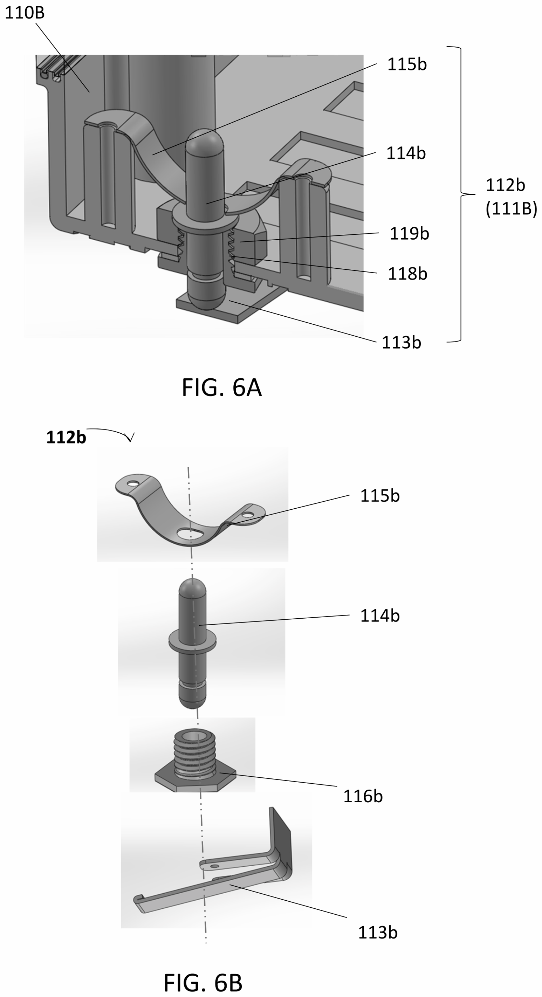

FIG. 5 shows a smart monitoring device 110B installed with a movement sensor 111B in accordance with another embodiment of the present invention. FIG. 6A shows a transmission system 112b of the movement sensor 111B inside the smart monitoring device 110B; and FIG. 6B shows an exploded view of the transmission system 112b. The movement sensor 111B may further include a transducer (not shown) mechanically coupled with or linked to the transmission system.

As shown, the transmission system 112b includes a resilient cantilever 113b; an actuator 114b mechanically coupled with or linked to the spring clip 113b; and a strip spring 115b mechanically coupled with or linked to the actuator 114b. The movement sensor 111B further includes an actuator holder 118b for holding the actuator 114b and guiding movement of the actuator 114b. The actuator holder 118b may be threaded externally and be fixed on the smart monitoring device 110B by using a hexagonal nut 119b or any other suitable means.

The actuator 114b is arranged at an original position to have one end exposed out of a surface 50 of the smart monitoring device 110B and configured to slidable to a triggering position along a direction normal to the surface 50. The surface 50 is a surface of the smart monitoring device 110B proximal to a base frame when the smart monitoring device 110B is mounted to a manhole cover and the manhole cover is placed on the base frame.

The resilient cantilever 113b has one end fixed or clipped on the smart monitoring device and another end flushed against the actuator 114b. In operation, the resilient cantilever 113b acts a movable part to be moved by a force exerted by a base frame or a shape adapter mounted on the base frame (not shown); and the actuator acts as a transmission part to transfer the motion to the transducer to trigger the transducer to generate an electrical signal.

When the manhole cover is placed on the base frame, the cantilever 113b is pressed by a force exerted by the base frame or the shape adapter to push up the actuator 114b from the original position to the triggering position. The transducer is then actuated by the actuator and triggered to generate an electrical signal indicative of that there is a manhole cover placed on the base frame.

When the manhole cover is removed from the base frame, the resilient cantilever 113b is released and the actuator 114b is pushed back to the original position by the strip spring 115b. The transducer is then switched to generate an electrical signal indicative of that there is no manhole cover placed on the base frame.

In some embodiments, referring to FIG. 5, the smart monitoring device 110B may further include an additional movement sensor 111B' for detecting whether the manhole cover is placed on a ground. The movement sensor 111B' is specially positioned such that when the manhole cover is placed on the base frame, the movement sensor 111B' does not touch any parts of the base frame or shape adapter. When the manhole cover is placed on the base frame, the cantilevers of both movement sensors 111B and 111B' would be pressed by the ground to push up actuators of both movement sensors from the original position to the triggering position. The transducers of both movement sensors would then be actuated and triggered to generate electrical signals respectively. The detection of electrical signals from both movement sensors are indicative of that the manhole cover is placed on the ground.

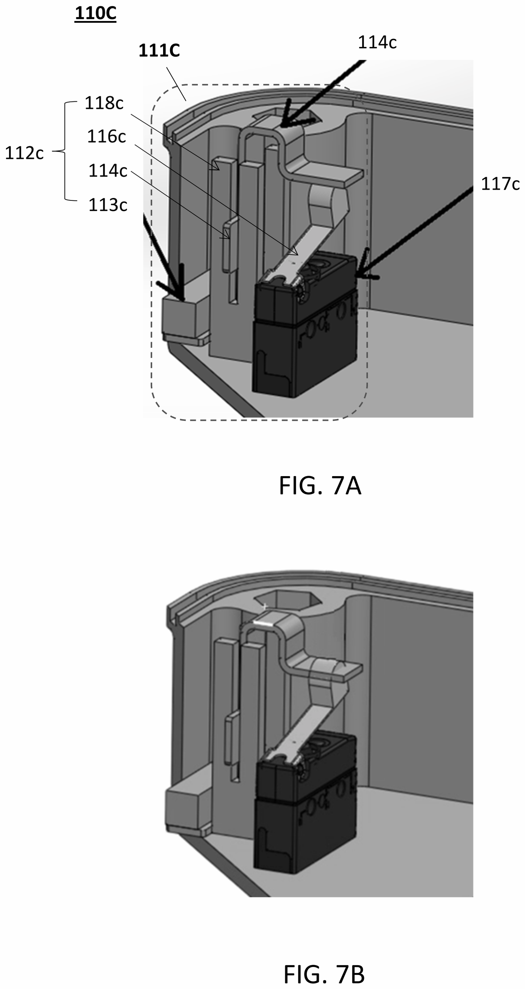

FIGS. 7A and 7B show a movement sensor 111C installed in a smart monitoring device 110C in accordance with another embodiment of the present invention.

As shown, the movement sensor 111C includes a transmission system 112c and a transducer 117c which may be a tactile switch. The transmission system 112c comprises a magnet 113c, an actuator 114c having one end fixed to the magnet 113c; and a trigger rod 116c having a first end fixed to another end of the actuator 114c and a second end fixed to the transducer 117c.

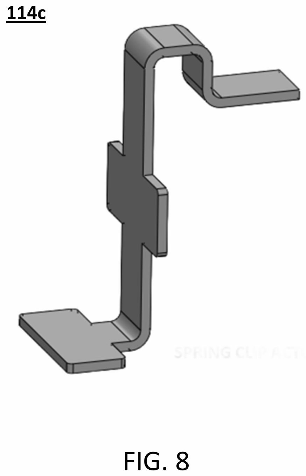

FIG. 8 shows an exemplary design of the actuator 114c. The movement sensor 111C further includes an actuator holder 118c for holding the actuator 114c and guiding movement of the actuator 114c. The movement sensor 111C further includes a resilient element (e.g. a spring) for biasing the actuator 114c.

The magnet 113c and the actuator 114c form a movable part arranged at an original position (FIG. 7A) proximal to a wall 50 of the smart monitoring device, and slidable to a triggering position (FIG. 7B) along a direction normal to the surface 50. The surface 50 is a surface of the smart monitoring device 110C proximal to a base frame when the smart monitoring device 110C is mounted to a manhole cover and the manhole cover is placed on the base frame.

When the manhole cover is removed from the base frame, the magnet 113c is released from the triggering position. The actuator 113c is biased by the spring and moved from the triggering position to the original position. The trigger rod 116c is released and the transducer 117c is switched to generate an electrical signal indicative of that there is no manhole cover placed on the base frame.

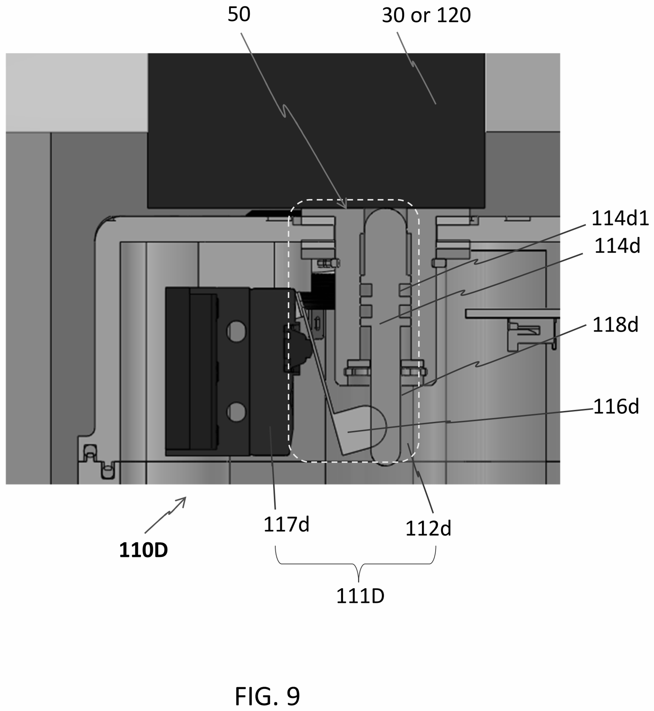

FIG. 9 shows a cross-sectional view of a movement sensor 111D installed in a smart monitoring device 110D in accordance with another embodiment of the present invention.

Referring to FIG. 9, the movement sensor 111D includes a transmission system 112d configured to receive a force exerted by the base frame 30 or the shape adapter 120; and a transducer 117d mechanically coupled with the transmission system 112d through a trigger lever 116d and configured to be triggered by the force transferred from the transmission system 112d to generate an electrical signal.

The transmission system 112d may include a sliding guide 118d, a sliding rod 114d configured to slide along the sliding guide 118d between an original position to expose out of an opening on a surface 50 of the smart monitoring device 110D and acts as a movable part to be moved by a force exerted by the based frame 30 or the shape adapter 120 to a triggering position. The surface 50 is a surface of the smart monitoring device 110D proximal to the base frame when the smart monitoring device 110D is mounted to a manhole cover and the manhole cover is placed on the base frame. The transmission system 112d may further include a biasing element (e.g., a spring) configured to bias the sliding rod 114d to the original position.

The sliding rod 114d may has one or more machined slots 114d1 to respectively accommodate one or more sealing rings (not shown) for sealing the opening on the surface 50 to prevent water and/or dirty particles from entering the smart monitoring device 110D. Moreover, under extreme conditions (e.g., fire or overheat) or when the batteries inside the smart monitoring device 110D is damaged, the sealing rings can prevent outgas of the batteries from leaking to the manhole to avoid explosion. Preferably, the sliding rod 114d may have two slots to accommodate two separate sealing rings to have extended lift span of sealing and more secure protection especially under prolonged chemical exposure.

When the manhole cover 20 is placed on the base frame 30, the base frame 30 or the shape adapter 120 is configured to exert a force against one end of the sliding rod 114d. The sliding rod 114d is then forced to slide from the original position to the triggering position (as shown in FIG. 9) and rotate the lever 116d to trigger the transducer 117d to generate an electrical signal indicative of that there is a manhole cover placed on the base frame.

When the manhole cover 20 is removed from the base frame, the sliding rod 114d is biased by the spring and moved from the triggering position to the original position. The transducer 117d is switched to generate an electrical signal indicative of that there is no manhole cover placed on the base frame.

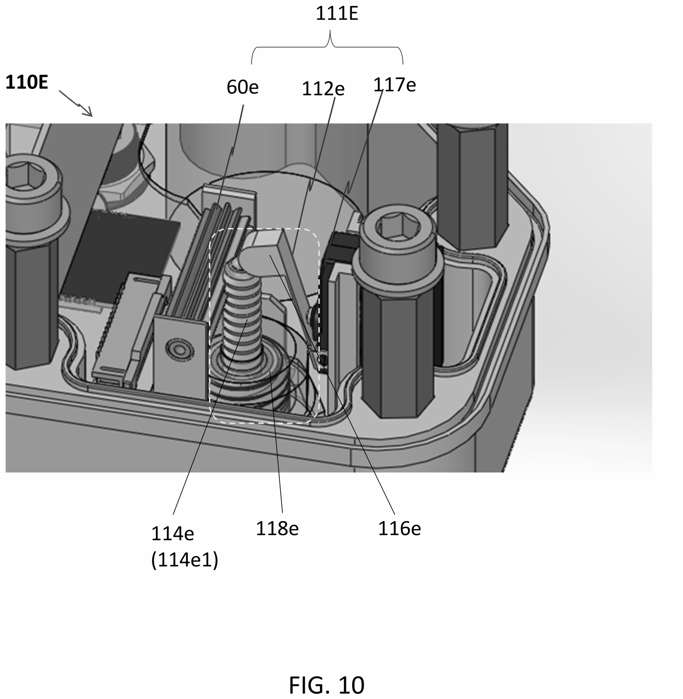

FIG. 10 shows a movement sensor (or a pressure sensor) 111E installed in a smart monitoring device 110E in accordance with another embodiment of the present invention.

Similar to the movement sensor 111D, the pressure sensor 111E includes a transmission system 112e configured to receive a force exerted by the base frame 30 or the shape adapter 120; and a transducer 117e mechanically coupled with the transmission system 112e through a trigger lever 116e and configured to be triggered by the force transferred from the transmission system 112e to generate an electrical signal.

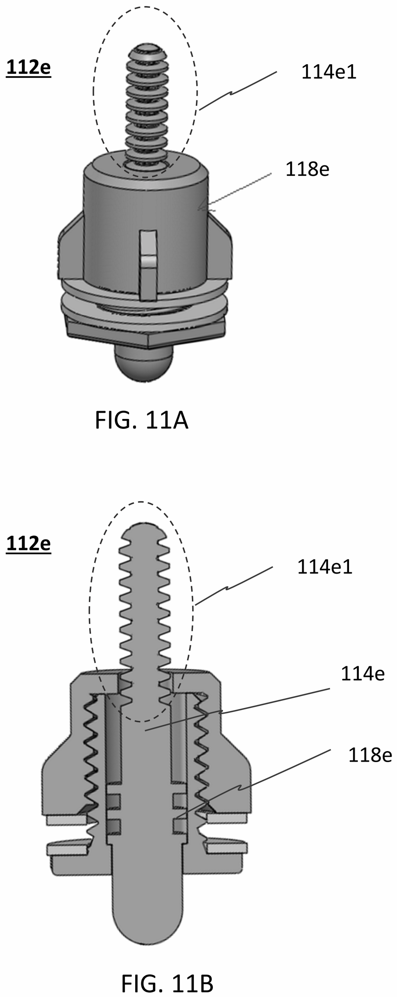

FIGS. 11A and 11B show an isometric view and a cross-sectional view of the transmission system 112e of the pressure sensor 111E, respectively. The transmission system 112e includes a sliding guide 118e, a sliding rod 114e configured to slide along the sliding guide 118e between an original position and a triggering position. The transmission system 112e may further include a biasing element (e.g., a spring) configured to bias the sliding rod 114e to the original position.

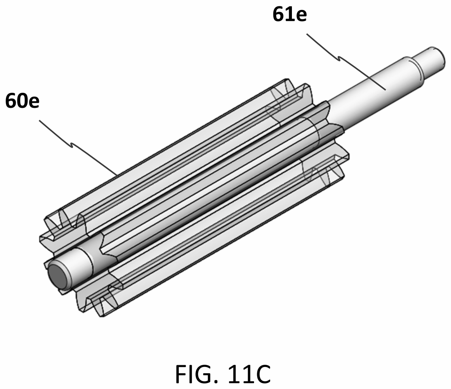

The pressure sensor 111E is different from the movement sensor 111D for that the sliding rod 114e has a threaded portion 114e 1; and the pressure sensor 111E further includes a positioning gear 60e mechanically coupled with the threaded portion 114el and a position decoder (not shown) coupled to the positioning gear 60e to measure a position of the sliding rod 114e. FIG. 11C shows a close-up view of the positioning gear 60e mounted on a rotational rod 61e linking the positioning gear 60e to the position decoder.

The local processor may be electrically connected to the decoder and further configured to process the electrical signal generated by the decoder to determine the position of the sliding rod and calculate a pressure exerted onto the sliding rod based on the determined position.

In one embodiment, the smart monitoring device 110 further includes a global navigation satellite system (GNSS) unit for monitoring location of the manhole cover. When the smart monitoring device is set to operate in a detection module and no manhole cover is detected at the base frame, the communication unit is configured to transmit a corresponding alert signal, identification and position information of the manhole cover to the remote or cloud-based processors.

In one embodiment, the smart monitoring device 110 further includes a water-level sensor, such as an ultrasonic sensor, for measuring water level under the manhole cover and generating an electrical signal indicative of the water level under the manhole cover. The local processor is further configured to compare the generated signal against a preset threshold to detect whether flooding occurs in the area around the manhole cover. If flooding is detected, the local processor transmits via the communication unit a corresponding alert signal, identification and position information of the manhole cover to the remote or cloud-based processors.

In one embodiment where a network of a plurality of manholes having installed with the manhole monitoring system 10 with its smart monitoring devices 110 having water-level sensors, the remote or cloud-based processors may receive a signal containing a water level information, identification and position information from each of the smart monitoring devices 110. The remote or cloud-based processors may analyze the received information to determine and locate possible drainage problem (i.e., a blocked drainage by comparing the water levels between two manholes).

In one embodiment, the smart monitoring device 110 further includes a temperature sensor for measuring ambient temperature in the manhole and generating an electrical signal indicative of the measured temperature. The local processor is further configured to compare the generated signal against a preset threshold to determine whether the measured temperature has reached a hazardous level. If the measured temperature is determined to have reached the hazardous level, the local processor transmits via the communication unit a corresponding alert signal, identification and position information of the manhole cover to the remote or cloud-based processors.

In one embodiment, the smart monitoring device 110 further includes a humidity sensor for measuring ambient humidity in the manhole and generating an electrical signal indicative of the measured humidity. The local processor is further configured to compare the generated signal against a preset threshold to determine whether the measured humidity has reached a hazardous level. If the measured humidity is determined to have reached a hazardous level, the local processor transmits via the communication unit a corresponding alert signal, identification and position information of the manhole cover to the remote or cloud-based processors.

In one embodiment, the smart monitoring device 110 further includes a gas concentration sensor for measuring a gas (e.g., oxygen, carbon monoxide, methane, sulfur dioxide, etc.) concentration in the manhole and generating an electrical signal indicative of the gas concentration. The local processor is further configured to compare the generated signal against a preset threshold to determine whether the gas concentration has reached a hazardous level. If the measured gas concentration is determined to have reached the hazardous level, the local processor transmits via the communication unit a corresponding alert signal, identification and position information of the manhole cover to the remote or cloud-based processors.

In one embodiment, the smart monitoring device 110 further includes a motion detector (i.e., ultrawide band sensor) for detecting movements in the manhole. When motion is detected, the local processor transmits via the communication unit a corresponding alert signal, identification and position information of the manhole cover to the remote or cloud-based processors.

The UWB sensor may be a worker's personal monitoring device (such as smart watch and smart helmet) that supports UWB communication and configured to provide location information in confined space and the person's vital sign transmission. In some embodiments, multiple smart monitoring devices may be configured to form a positioning source in one or more manholes and/or underground tunnels to perform location identification.

In one embodiment where a network of a plurality of manholes having installed with the manhole monitoring system 10 with its smart monitoring devices 110 having motion detectors, the remote or cloud-based processors may receive a signal containing a motion-detected information, identification and position information from each of the smart monitoring devices 110. The remote or cloud-based processors may analyze the received information to track the movements and locations of the worker or crew in the underground tunnel (i.e., a blocked drainage by comparing the water levels between two manholes).

In some embodiments, the smart monitoring device further includes an inertial measure unit (IMU) to reduce false alarm and obtain more fine grain details of vibration data caused by motions (e.g., caused by a vehicle passing across the manhole cover), which the movement sensor is not sensitive enough to detect. Moreover, under the circumstances that the mechanical pressure sensor malfunctions, the IMU can act as a backup sensor for detecting the movement of the manhole cover.

In one embodiment, the smart monitoring device 110 further includes a vibration sensor for sensing ground vibration. The sensing signal is transmitted by the local processor via the communication unit, along with the identification and position information of the manhole cover, to the remote or cloud-based processors.

In one embodiment where a network of a plurality of manholes having installed with the manhole monitoring system 10 with its smart monitoring devices 110 having vibration sensors, the remote or cloud-based processors may receive a continuous signal containing a ground vibration data, identification and position information from each of the smart monitoring devices 110. The remote or cloud-based processors may analyze the received information to discern normal vibrations caused by road traffic and seismic activities. With the received information recorded over time, a large collection of recorded ground vibration data may then be used by machine learning (ML) in earthquake prediction models.

In one embodiment, in a network of a plurality of manholes having installed with the manhole monitoring system 10, the communication units of some of the smart monitoring devices 110 may support 3G/4G/5G/6G wireless wide area network data communication (i.e., where 3G/4G/5G/6G signals are available), while some others may only support wireless local area network data communication (i.e., via WiFi). In this case, a plurality of the smart monitoring devices 110 may be configured in a mesh network (i.e., LoRa mesh, WIFI mesh and Bluetooth mesh network) to enable data communication message relaying among the networked smart monitoring devices 110 and the remote or cloud-based processors.

In one embodiment, the smart monitoring device further includes an actuator, i.e., an electromechanical button, for emergency/alarm triggering, a feature useful to in-tunnel workers.

FIGS. 12A and 12B show a top perspective view and a bottom perspective view respectively of a shape adapter 300a in accordance with one embodiment of the present invention.

FIG. 12C shows a photograph illustrating a prototype shape adapter 300a installed on to a base frame 30a and how it cooperates with the smart monitoring device 110 installed on to the manhole cover 20.

As shown, the shape adapter 300a comprises a fixing mechanism 310a for fitting the shape adapter to the base frame; and one or more pressure-exerting platforms 320a for exerting pressure (pressing force) to the pressure-sensitive structure (or transmission system) of the pressure sensor (or movement sensor) of the smart monitoring device installed on to the manhole cover. The pressure-exerting platforms 320a are configured to be in contact with the pressure-sensitive structure when the shape adapter 300a and the monitoring device are installed on to the base frame 30a and manhole cover respectively, and the manhole cover is properly placed over the manhole.

In one embodiment, the positions of the pressure-exerting platforms 320a also function as alignment keys for the manhole cover. Referring to FIGS. 12D and 12E, the positions of the pressure-exerting platforms 320a are specifically designed to correspond with the comb structure 201 at the bottom of the manhole cover 20 such that the manhole cover must be arranged in the correct orientation to be completely inserted into the manhole and be supported by the base frame as shown in FIGS. 12F and 12G; otherwise, the pressure-exerting platforms 320a would suspend the branches of the comb structure 201 as shown in FIG. 12H, causing the manhole cover 20 be not completely inserted into the manhole as shown in FIGS. 12I and 12J. Moreover, the pressure-exerting platforms 320a are specially designed to have a protruding height such that the shape adapter 300a must be arranged in the correct orientation when installed on the base frame 30a. If the shape adapter 300a is flipped upside down as shown in FIGS. 12K and 12L, the pressure-exerting platforms 320a would raise the overall height of the shape adapter 300a with respect to the base frame 30a, and therefore causing the manhole cover be not completely inserted into the manhole.

In this embodiment, the fixing mechanism 310a has a ring-shaped fitting structure configured to fit around an opening of the base frame to secure the shape adapter on to the base frame. The ring-shaped fitting structure also mitigates the dropping in of the shape adapter 300a into the manhole during its installation on to the base frame.

FIGS. 13A and 13B show a top perspective view and a bottom perspective view respectively of a shape adapter 300b in accordance with another embodiment of the present invention. FIG. 13C shows a photo illustrating a prototype shape adapter 300b installed on to a base frame 30b and how it cooperates with a smart monitoring device 110 installed on to a manhole cover 20.

As shown, the shape adapter 300b comprises a fixing mechanism 310b for fitting the shape adapter to the base frame; and one or more pressure-exerting platforms 320b for exerting pressure to the pressure-sensitive structure (or transmission system) of the pressure sensor (or movement sensor) in the smart monitoring device installed on to the manhole cover. The pressure-exerting platforms 320b are configured to be in contact with the pressure-sensitive structure when the shape adapter 300b and the monitoring device 110 are installed on to the base frame and manhole cover respectively, and the manhole cover is properly placed over the manhole. In one embodiment, the positions of the pressure-exerting platforms 320b also function as alignment keys for the manhole cover.

Referring to FIGS. 13D and 13E, the placement of the shape adapter 300b on the base frame is specifically designed to correspond with the comb structure 201 at the bottom of the manhole cover 20 such that the manhole cover must be arranged in the correct orientation to be completely inserted into the manhole and be supported by the base frame 30b as shown in FIG. 13F; otherwise, the pressure-exerting platforms 320b would suspend a branch of the comb structure as shown in FIGS. 13G and 13H, causing the manhole cover be not completely inserted into the manhole as shown in FIG. 13I. Moreover, the pressure-exerting platforms 320b are specially designed to have a protruding height such that the shape adapter 300b must be arranged in the correct orientation when installed on the base frame 30b. If the shape adapter 300b is flipped upside down as shown in FIGS. 13J and 13K, the pressure-exerting platforms 320b would raise the overall height of the shape adapter 300b with respect to the base frame 30, and therefore causing the manhole cover be not completely inserted into the manhole.

In this embodiment, the fixing mechanism 310b has a C-shaped clipping structure configured for securing to an opening of the base frame to fix the shape adapter to the base frame.

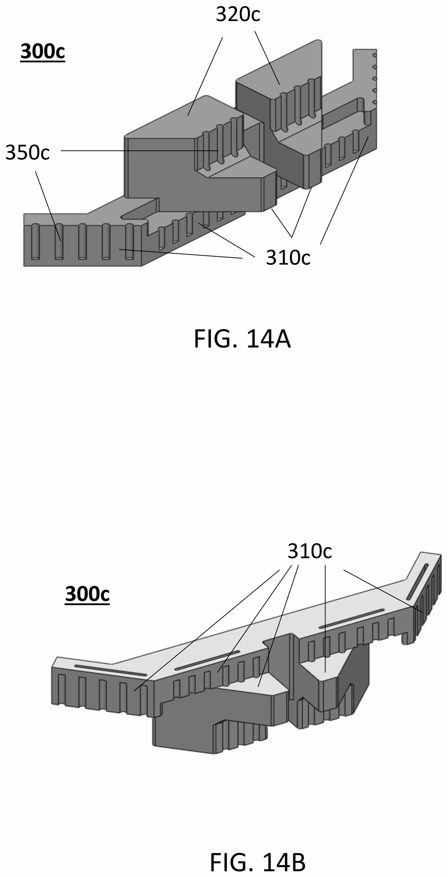

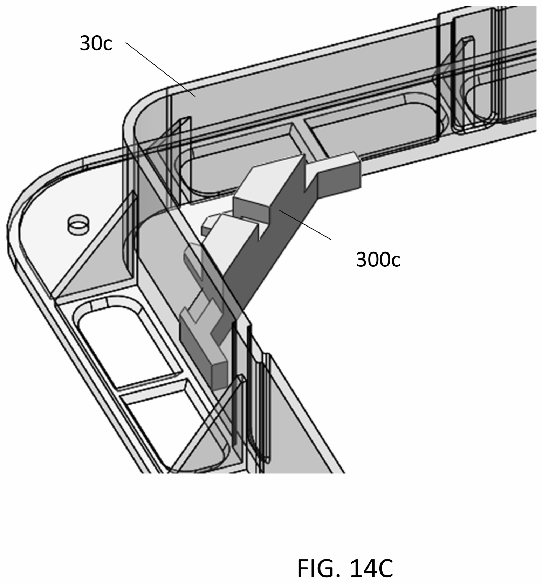

FIGS. 14A and 14B show a top isometric view and a bottom isometric view of a shape adapter 300c in accordance with another embodiment of the present invention; and FIG. 14C shows a diagram illustrate how the shape adapter 300c is installed on to a base frame 30c. As shown, the shape adapter 300c comprises attachment surfaces 310c for attaching on the base frame 30c; and one or more pressure-exerting platforms 320c for exerting pressure to the movement/pressure sensor (not shown) in the smart monitoring device installed on to the manhole cover. The pressure-exerting platforms 320c are configured to be in contact with the movement/pressure sensor when the shape adapter 300c and the monitoring device 110 are installed on to the base frame and manhole cover respectively, and the manhole cover is properly placed over the manhole.

The shape adapter 300c may further include a plurality of micro-grooves 350c. When the shape adapter 300c is mounted on to the base frame, a plurality of channels is formed by the micro-grooves 350c to allow the applied resins or glues to flow to the attachment surfaces 310c.

In some embodiments, the plurality of micro-grooves 350c is specially-designed not to pass through the overall height of the shape adapter 300c such that the plurality of channels is blind-holed to retain the applied resins or glues.

The shape adapter 300c has a shape conforming to a corner of the base frame 30c such that the attachment surfaces 310c are in contact with corresponding walls of the base frame 30c. The shape adapter 300c may be secured to the corner of the base frame by applying resins or glues to interfaces between the adapter 300c and the base frame.

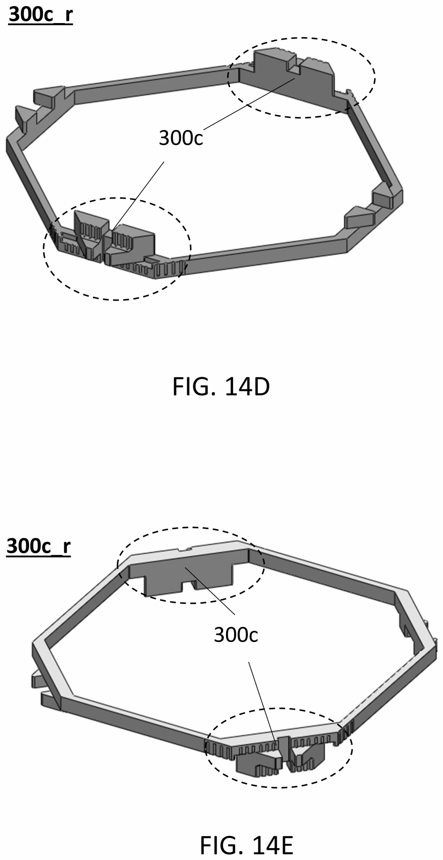

FIGS. 14D and 14E shows a top isometric view and a bottom isometric view of a shape adapter 300c_r in accordance with another embodiment of the present invention respectively. The shape adapter 300c_r has a ring structure including one or more corners which are similar to the shape adapter 300c. In other words, the shape adapter 300c_r is a ring design version of the shape adapter 300c. The shape adapter 300c_r may be a single integral part, as shown in FIGS. 14D and 14E. Alternatively, the shape adapter 300c_r may be formed by assembling one or more shape adapters 300c with linking rods/bars; and accordingly, the shape adapters 300c may further include a locking mechanism for locking to a linking rod/bar.

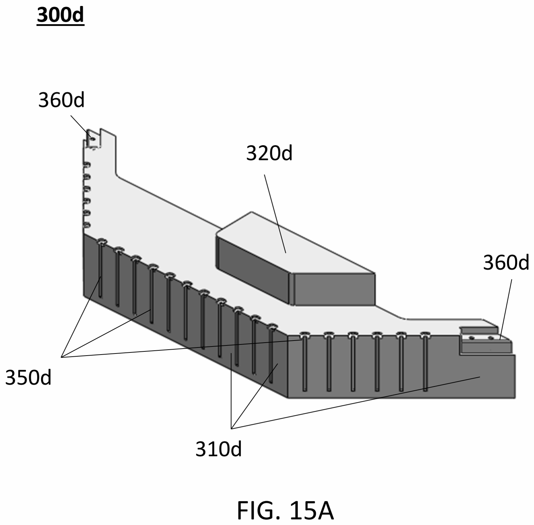

FIG. 15A shows a shape adapter 300d in accordance with another embodiment of the present invention. Referring to FIG. 15A, the shape adapter 300d comprises of attachment surfaces 310d for attaching on the base frame; and one or more pressure-exerting platforms 320d for exerting pressure to the movement/pressure sensor in the smart monitoring device installed on to the manhole cover. The shape adapter 300d has a shape conforming to a corner of the base frame such that the attachment surfaces 310d are in contact with corresponding walls of the base frame.

The shape adapter 300d may further include a plurality of micro-grooves 350d formed on the attachment surface 310d. When the shape adapter 300d is mounted on to the base frame and the attachment surfaces 310d are in contact with the base frame, a plurality of channels is formed by the micro-grooves 350d to allow the applied resins or glues to flow. The plurality of micro-grooves 350d is specially-designed not to pass through the overall height of the shape adapter 300d such that the plurality of channels is blind-holed to retain the applied resins or glues.

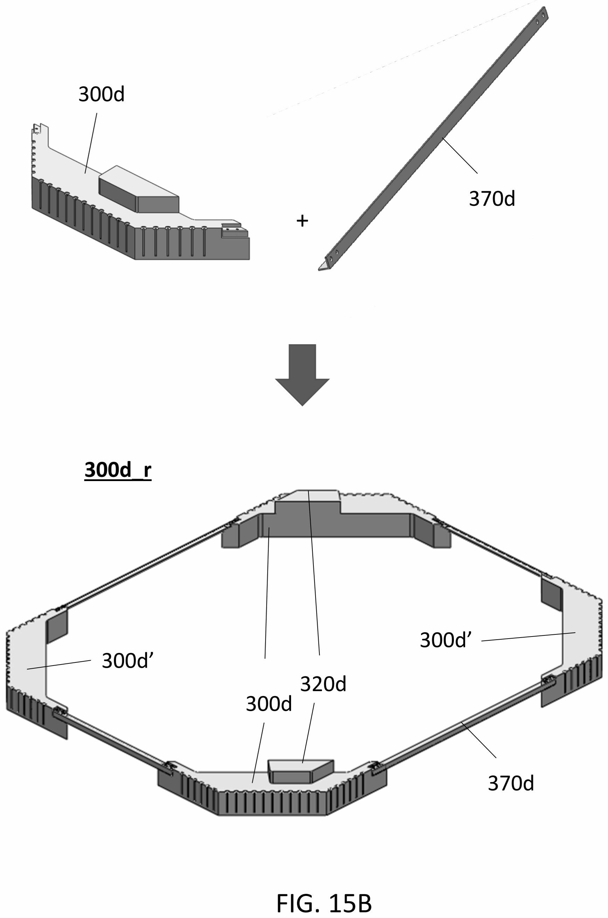

In some embodiments, the shape adapters 300d may further include a locking mechanism 360d for locking to a linking rod/bar 370d such that a ring-type shape adapter 300d_r may be formed as shown in FIG. 15B. In other words, the shape adapter 300d_r is a ring design version of the shape adapter 300d. Alternatively, the shape adapter 300d_r may be a single integral part including one or more corners with structure similar to the shape adapter 300d.

Preferably, the ring-type shape adapter 300d_r may have a pair of shape adapters 300d arranged at a pair of opposite corners; and another pair of shape adapters 300d' arranged at another pair of opposite corners. Each shape adapter 300d has a pressure-exerting platform 320d while each shape adapter 300d' has no pressure-exerting platform. As such,

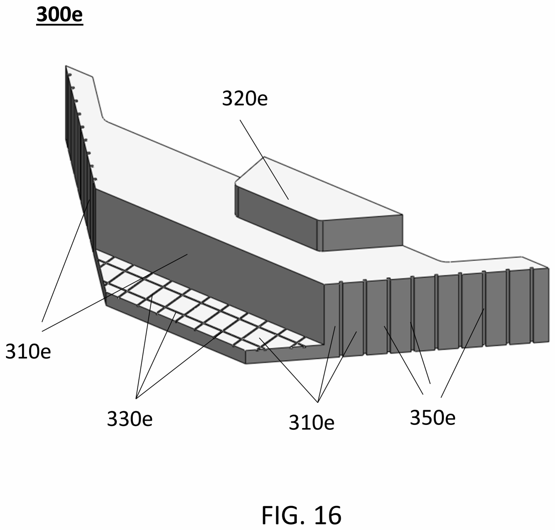

FIG. 16 shows a shape adapter 300e in accordance with another embodiment of the present invention. As shown, the shape adapter 300e comprises attachment surfaces 310e for attaching on the base frame; one or more pressure-exerting platforms 320e for exerting pressure to the movement/pressure sensor in the smart monitoring device installed on to the manhole cover; and a fitting plate 330e for fitting the adapter to the base frame. The shape adapter 300e has a shape conforming to a corner of the base frame such that the attachment surfaces 310e and the fitting plate 330e are in contact with corresponding walls of the base frame.

The shape adapter 300e may further include a plurality of micro-grooves 350e formed on the attachment surface 310e. When the shape adapter 300e is mounted on to the base frame and the attachment surfaces 310e are in contact with the base frame, a plurality of channels is formed by the micro-grooves 350e to allow the applied resins or glues to flow.

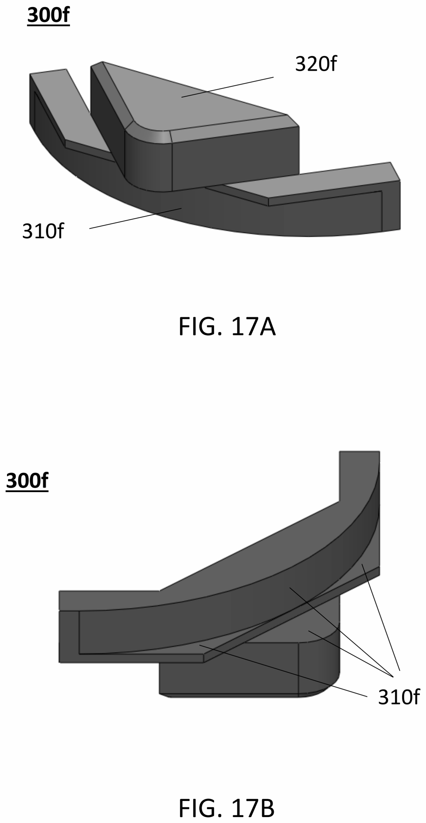

FIGS. 17A and 17B shows a top isometric view and a bottom isometric view of a shape adapter 300f in accordance with another embodiment of the present invention. As shown, the shape adapter 300f comprises of curved attachment surfaces 310f for attaching on the base frame; and one or more pressure-exerting platforms 320f for exerting pressure to the pressure-sensitive structure (or transmission system) of the pressure sensor (or movement sensor) in the smart monitoring device installed on to the manhole cover. The pressure-exerting platforms 320f are configured to be in contact with the pressure-sensitive structure when the shape adapter 300f and the monitoring device are installed on to the base frame and manhole cover respectively, and the manhole cover is properly placed over the manhole.

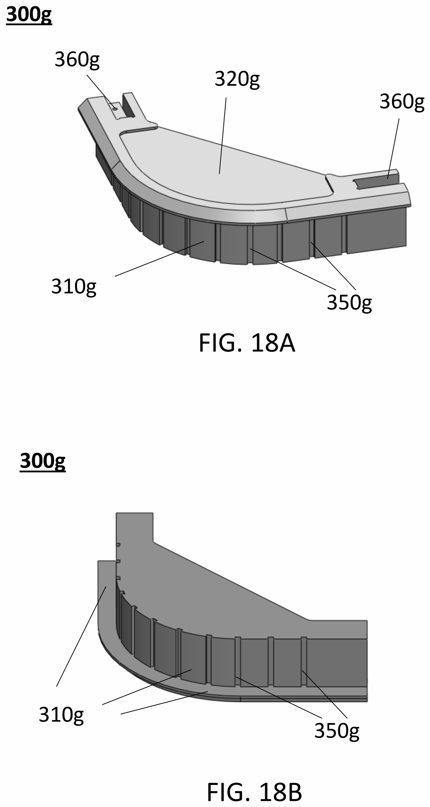

FIGS. 18A and 18B shows a top isometric view and a bottom isometric view of a shape adapter 300g in accordance with another embodiment of the present invention. As shown, the shape adapter 300g comprises of curved attachment surfaces 310g for attaching on the base frame; and one or more pressure-exerting platforms 320g for exerting pressure to the pressure-sensitive structure (or transmission system) of the pressure sensor (or movement sensor) in the smart monitoring device installed on to the manhole cover. The pressure-exerting platforms 320g are configured to be in contact with the pressure-sensitive structure when the shape adapter 300g and the monitoring device are installed on to the base frame and manhole cover respectively, and the manhole cover is properly placed over the manhole.

The shape adapter 300g may further include a plurality of micro-grooves 350g formed on the attachment surface 310g. When the shape adapter 300g is mounted on to the base frame and the attachment surfaces 310g are in contact with the base frame, a plurality of channels is formed by the micro-grooves 350g to allow the applied resins or glues to flow. In this embodiment, the plurality of micro-grooves 350g are specially-designed to have one end passing through an edge of the shape adapter 300g such that excess amounts of applied resins or glues can escape out from the interface between the adapter and the base frame. In another embodiment, the plurality of micro-grooves 350g may be specially-designed not to pass through the overall height of the shape adapter 300g such that the plurality of channels is blind-holed to retain the applied resins or glues.

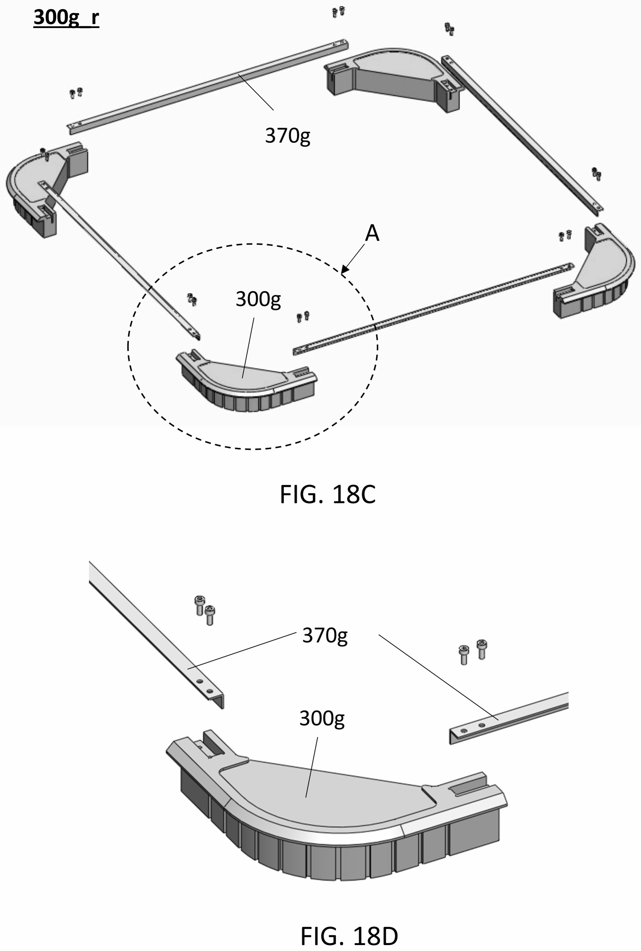

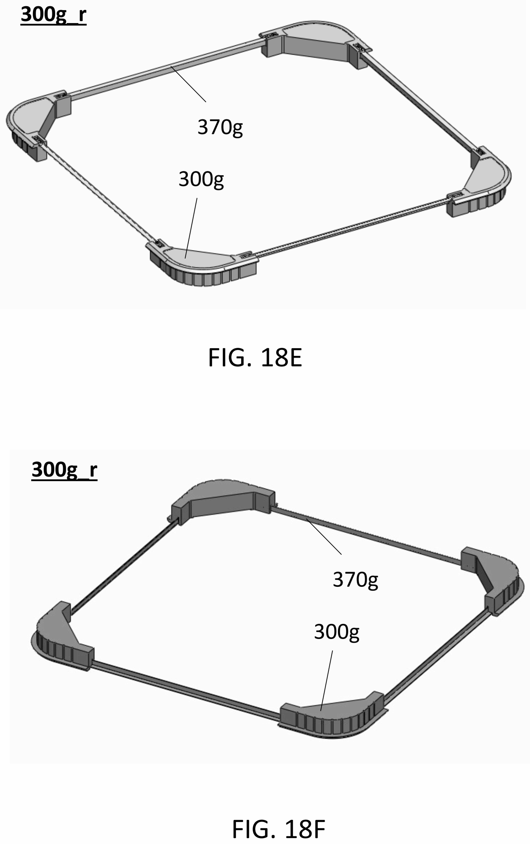

In some embodiments, the shape adapters 300g may further include a locking mechanism 360g for locking to linking rod/bars 370g to form a ring-type shape adapter 300g_r as shown in FIGS. 18C and 18D. As shown in FIGS. 18E and 18F, the shape adapter 300g_r is a ring design version of the shape adapter 300g, which is formed by assembling four shape adapters 300g and four linking bars 370g. Alternatively, the shape adapter 300g_r may be a single integral part including one or more corners with structure similar to the shape adapter 300g.

In some embodiments, the shape adapter 300a/300b/300c/300d/300e/300f/300g may be equipped with a UV light source, such as UV LEDs, for curing the applied resins.

Similar to the pressure-exerting platforms 320b, the positions of the pressure-exerting platforms 320a/320b/320c/320d/320e/320f/320g also function as alignment keys for the manhole cover. The placement of the shape adapter 300a/300b/300c/300d/300e/300f/300g on the base frame is specifically designed to correspond with the comb structure at the bottom of the manhole cover such that the manhole cover must be arranged in the correct orientation when inserted into the manhole and be supported by the base frame; otherwise, the pressure-exerting platforms 320a/320b/320c/320d/320e/320f/320g would suspend a branch of the comb structure, causing the manhole cover be not completely inserted into the manhole. Moreover, the pressure-exerting platforms 320a/320b/320c/320d/320e/320f/320g are specially designed to have a protruding height such that the shape adapter 300a/300b/300c/300d/300/300f/300g e must be arranged in the correct orientation when installed on the base frame. If the shape adapter 300a/300b/300c/300d/300e/300f/300g is flipped upside down, the pressure-exerting platforms 320a/320b/320c/320d/320e/320f/320g would raise the overall height of the shape adapter 300a/300b/300c/300d/300e/300f/300g with respect to the base frame, and therefore causing the manhole cover be not completely inserted into the manhole.

In some embodiments, the shape adapters provided by the present invention may be specially designed to correspond with the inner shape and structure of the base frame such that if a wrong type adapter is used, the wrong type adapter cannot sit properly at the base frame and will lift up a manhole cover inserted into the base frame.

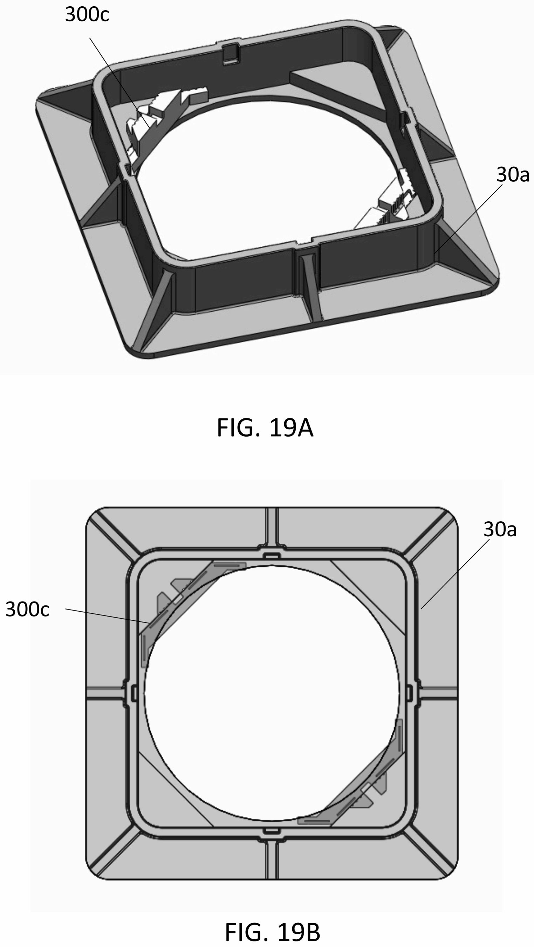

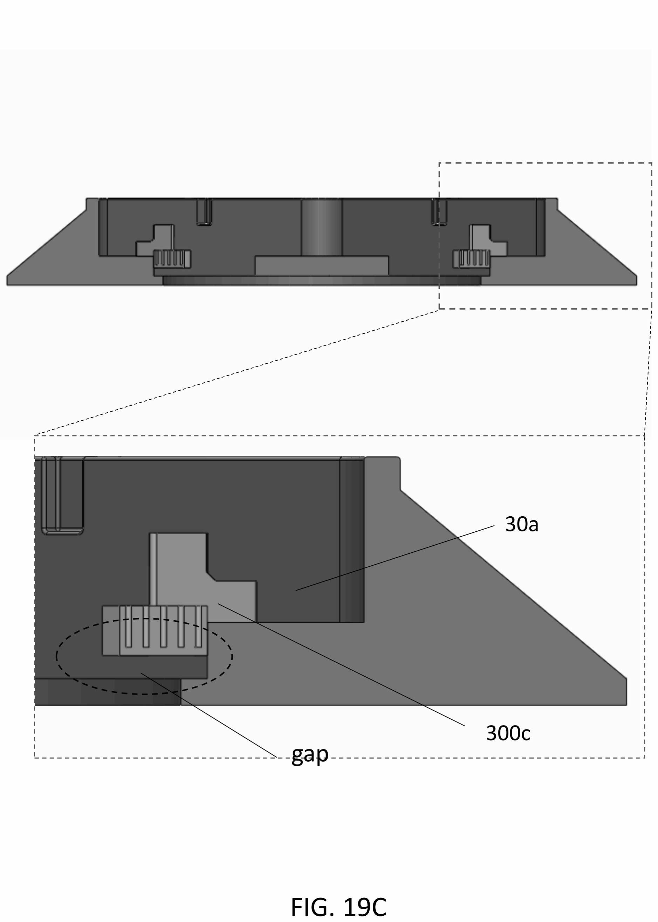

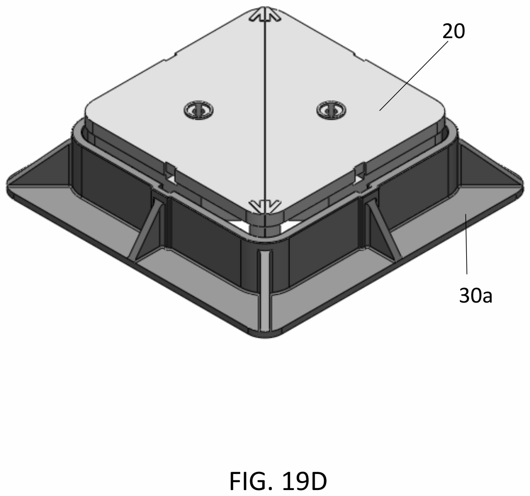

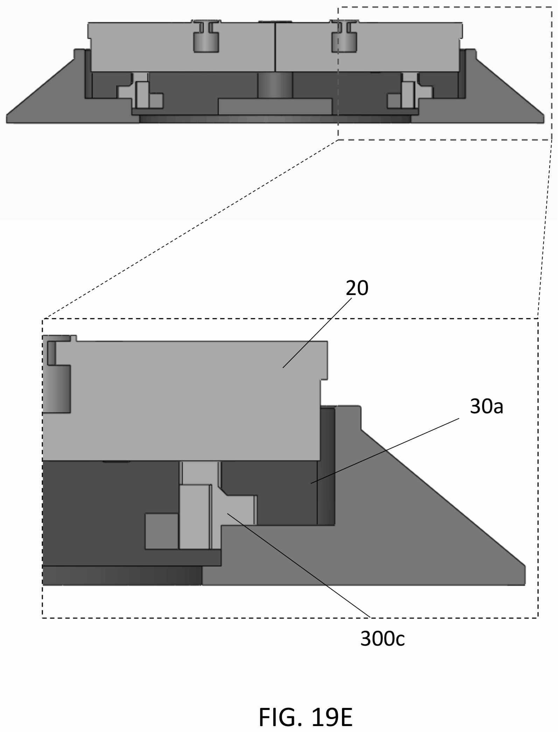

For example, referring to FIGS. 19A to 19E, when shape adapter 300c is wrongly used for a base frame 30a as shown in FIGS. 19A and 19B, the adapter 300c sits at a triangular corner of the base frame 30a, leaving a gap between the adapter 300c and edge of the base frame 30a and causing unsecure installation as shown in FIG. 19C. When a manhole cover 20 is placed on the base frame 30a, the wrong type shape adapter 300c would lift up the manhole cover and cause the manhole cover be not completely inserted into the manhole as shown in FIGS. 19D and 19E.

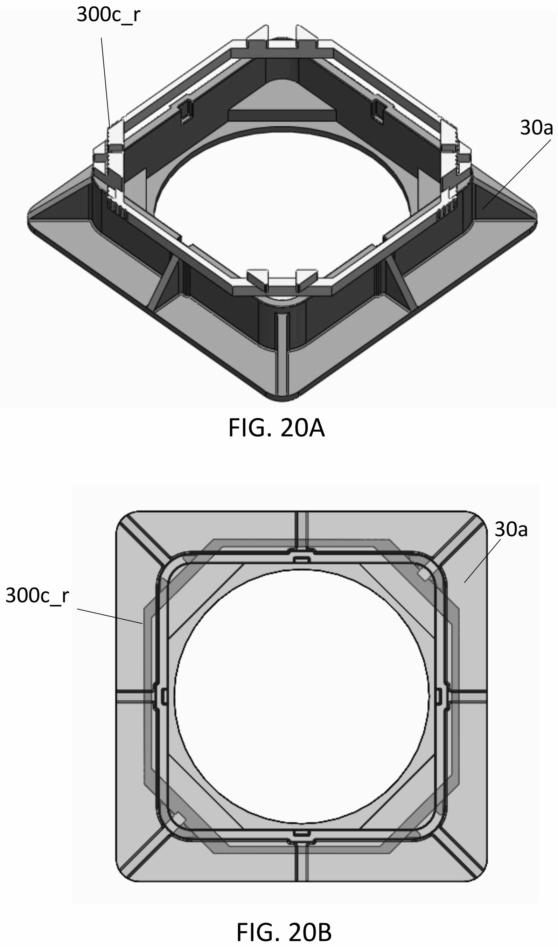

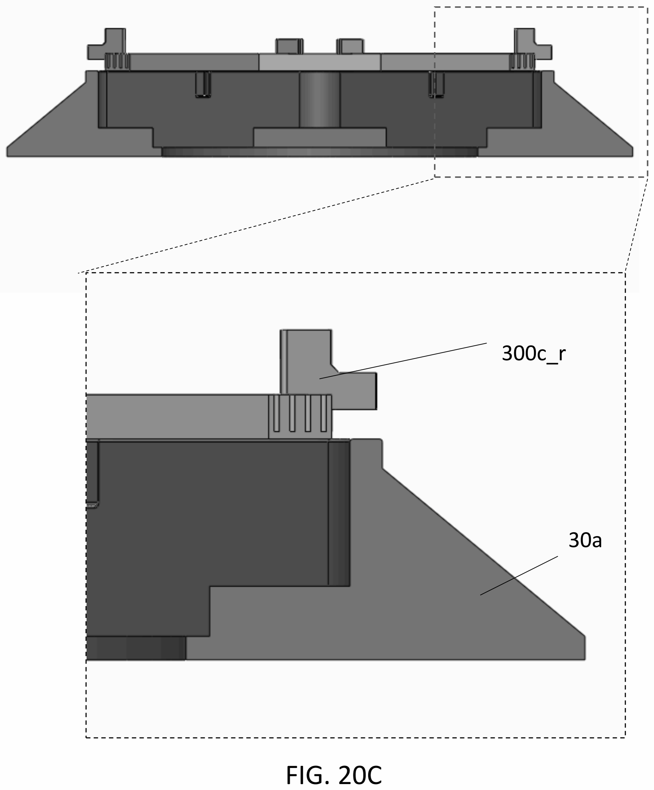

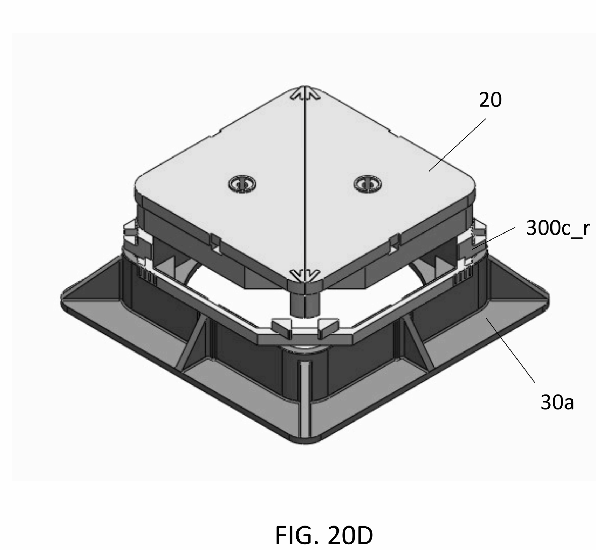

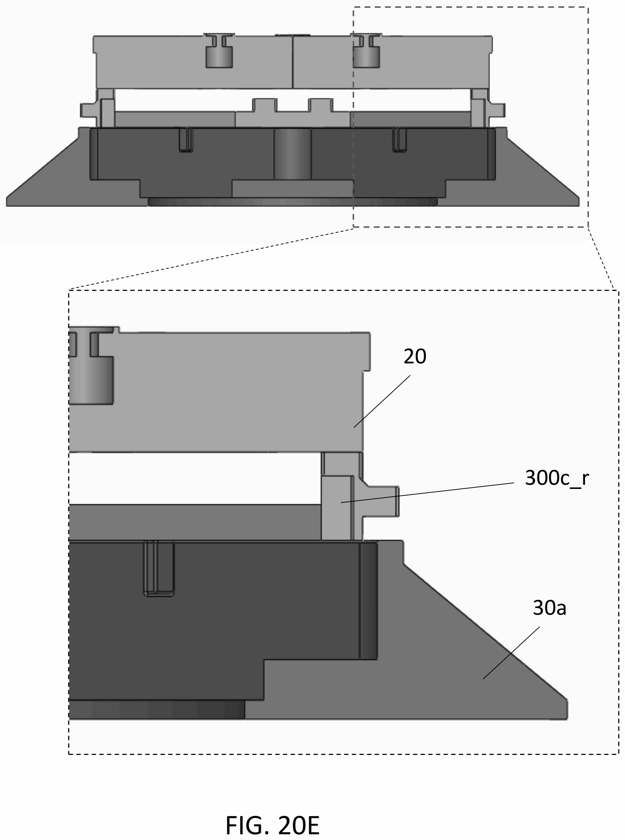

For another example, referring to FIGS. 20A to 20E, when shape adapter 300c_r is wrongly used for a base frame 30a as shown in FIGS. 20A and 20B, the adapter 300c_r cannot sit into the base frame 30a for being larger than the inner shape of the base frame 30a as shown in FIG. 20C. When a manhole cover 20 is placed on the base frame 30a, the wrong type shape adapter 300c_r would lift up the manhole cover and cause the manhole cover be not completely inserted into the manhole as shown in FIGS. 20D and 20E.

Preferably, the shape adapter 300a/300b/300c/300d/300e/300f/300g is made of electrostatic-free, high corrosion resistive, and fire-retardant material, such as, but not limited to, Metal, Polyamide (PA), Nylon, acrylic, Ploycarbonate (PC), Polyetheretherketone (PEEK), Polytetrafluoroethylene (PTFE), Acrylonitrile butadiene styrene (ABS), Polyethylene terephthalate glycol (PETG), Polyvinyl Chloride (PVC), Glass, Fiber Glass, Carbon Fiber, EProxy, Resin, Concrete, Sand and the mix of the above materials.

The functional units and modules, including the local processor and communication unit of the smart monitoring device, and the one or more remote and cloud-based processors, of the manhole monitoring system in accordance with the embodiments disclosed herein may be implemented using computer processors, or electronic circuitries including but not limited to application specific integrated circuits (ASIC), field programmable gate arrays (FPGA), microcontrollers, and other programmable logic devices configured or programmed according to the teachings of the present disclosure. Computer instructions or software codes running in the computing devices, computer processors, or programmable logic devices can readily be prepared by practitioners skilled in the software or electronic art based on the teachings of the present disclosure.

The one or more remote and cloud-based processors configured to execute all or portions of the methods in accordance to the embodiments may be contained within one or more computing devices including server computers, personal computers, laptop computers, mobile computing devices such as smartphones and tablet computers.

The electrical components in the various embodiments may include computer storage media, transient and non-transient memory devices having computer instructions or software codes stored therein, which can be used to program or configure the computing devices, computer processors, or electronic circuitries to perform any of the processes of the present invention. The storage media, transient and non-transient memory devices can include, but are not limited to, floppy disks, optical discs, Blu-ray Disc, DVD, CD-ROMs, and magneto-optical disks, ROMs, RAMs, flash memory devices, or any type of media or devices suitable for storing instructions, codes, and/or data.

Each of the functional units and modules in accordance with various embodiments also may be implemented in distributed computing environments and/or Cloud computing environments, wherein the whole or portions of machine instructions are executed in distributed fashion by one or more processing devices interconnected by a communication network, such as an intranet, Wide Area Network (WAN), Local Area Network (LAN), the Internet, and other forms of data transmission medium.

While the present disclosure has been described and illustrated with reference to specific embodiments thereof, these descriptions and illustrations are not limiting. The illustrations may not necessarily be drawn to scale. There may be distinctions between the artistic renditions in the present disclosure and the actual apparatus due to manufacturing processes and tolerances. There may be other embodiments of the present disclosure which are not specifically illustrated. Modifications may be made to adapt a particular situation, material, composition of matter, method, or process to the objective and scope of the present disclosure. All such modifications are intended to be within the scope of the claims appended hereto. While the methods disclosed herein have been described with reference to particular operations performed in a particular order, it will be understood that these operations may be combined, sub-divided, or re-ordered to form an equivalent method without departing from the teachings of the present disclosure. Accordingly, unless specifically indicated herein, the order and grouping of the operations are not limitations.

## Claims

1. A manhole monitoring system, comprising:
a smart monitoring device installable on to a manhole cover; and
a shape adapter installable on to a base frame mated with the manhole cover;
wherein the smart monitoring device includes a movement sensor configurable to detect a presence of the manhole cover on the base frame;
the movement sensor includes a transmission system and a transducer mechanically coupled with or linked to the transmission system;
when the manhole cover is placed on the base frame, the transmission system is configured to transfer a force exerted by the base frame to the transducer to trigger the transducer to generate an electrical signal indicative of that there is a manhole cover placed on the base frame; and
when the manhole cover is removed from the base frame, the transducer is released from the transmission system and switched to generate an electrical signal indicative of that there is no manhole cover placed on the base frame.

2. The manhole monitoring system according to claim 1, further includes pressure sensor including:
a pressure-sensitive structure configured to receive a pressure exerted by the base frame; and
a transducer mechanically coupled with the pressure-sensitive structure and configured to transform the pressure exerted to the pressure-sensitive structure to generate an electrical signal; and
the smart monitoring device further includes:
a local processer electrically connected to the transducer and configured to process the generated electrical signal to determine whether the presence the manhole cover is placed at the base frame; and
a communication unit configured to transmit an alert to a remote or cloud-based processor when the presence of manhole cover on the base frame is not detected.

3. The manhole monitoring system according to claim 2, wherein
the pressure-sensitive structure includes:
a sliding guide;
a sliding rod configured to slide along the sliding guide between a retracted position and a protruded position; and
a biasing element configured to bias the sliding rod at the protruding position; and
the pressure transducer is mechanically coupled with the pressure-sensitive structure through a lever.

4. The manhole monitoring system according to claim 3, wherein when the manhole cover is placed on the base frame, the shape adapter is configured to exert a pressure on a protruding end of the sliding rod to force the sliding rod to slide from the protruding position to the retracted position and rotate the lever to trigger the transducer to generate the electrical signal.

5. The manhole monitoring system according to claim 4, wherein the shape adapter includes:
a fixing mechanism for fitting the shape adapter to the base frame; and
one or more pressure-exerting platforms for exerting pressure to the pressure-sensitive structure of the pressure sensor of the smart monitoring device installed on to the manhole cover.

6. The manhole monitoring system according to claim 5, wherein the one or more pressure-exerting platforms are configured to be in contact with the pressure-sensitive structure when the shape adapter and the monitoring device are installed on to the base frame and manhole cover respectively.

7. The manhole monitoring system according to claim 6, wherein the fixing mechanism has a ring-shaped fitting structure configured to fit around an opening of the base frame to fix the shape adapter to the base frame.

8. The manhole monitoring system according to claim 6, wherein the fixing mechanism has a c-shaped clipping structure configured to clip to an opening of the base frame to fix the shape adapter to the base frame.

9. The manhole monitoring system according to claims 7 or 8, wherein the smart monitoring device has an outer enclosure with a shape that can be fit into a cavity of a comb structure at a bottom of the manhole cover; and the smart monitoring device has a height less than an inner height of the cavity.

10. The manhole monitoring system according to claim 9, wherein the smart monitoring device further comprises:
a global navigation satellite system (GNSS) unit for monitoring location of the manhole cover;
a water-level sensor for measuring water level under the manhole cover;
a temperature sensor for measuring ambient temperature in the manhole;
a humidity sensor for measuring ambient humidity in the manhole;
a gas concentration sensor for measuring a gas concentration in the manhole;
a motion detector for detecting movements in the manhole;
a vibration sensor for sensing ground vibration; and/or
an Inertial measure unit (IMU) for collecting fine grain vibration data.
